# EUROPEAN PATENT APPLICATION

(11) **EP 4 738 289 A1**
(43) Date of publication of application: **06.05.2026**
(21) Application number: 24209434.0
(22) Date of filing: 29.10.2024
(51) Int. Cl.: G06V 20/40, G06V 20/52, G06V 40/20

(54) **VIDEO ANALYSIS METHOD AND SYSTEM DETERMINING OR PREDICTING PATIENT MOVEMENTS IN A MEDICAL OBSERVATION SETTING**

(71) Applicant: M2Call ApS, 2630 Taastrup (DK)
(72) Inventor: AOUN, Toni Elias, 2630 Taastrup (DK); LANGE, Michael, 2630 Taastrup (DK); MADSEN, Karsten Frank Rye, 2630 Taastrup (DK); NIELSEN, Jacob Eric, 2630 Taastrup (DK); JANSEN, Tejs, 3460 Birkerød (DK); HAMMER, Niels Risør, 2860 Søborg (DK); PEDERSEN, Lasse Helmer, 2450 Copenhagen SV (DK); INGDAM-LINDGREN, Gustaf Mark Hasse, 2630 Taastrup (DK)
(74) Representative: Guardian IP Consulting I/S

(57) **Abstract**

The present disclosure relates to a computer-implemented method (300) performing video analysis of a video-feed (111), where the method comprises the steps of: obtaining or extracting a plurality of frames (112) from at least a segment of the video-feed (111), generating pose data (112') for each or a least a predetermined number of the plurality of frames (112), the generated pose data (112') representing at least a part of a person or patient (101) comprised by at least one, typically a plurality, of the plurality of frames (112), processing (304), by a first patient movement detector or predictor (200), the generated pose data (112'), and/or first additional data derived on the basis of the generated pose data (112'), to detect or predict at least a first movement of the patient (101) resulting in first data representing first movement detection output data (150).

## Description

### Field of the invention

The present invention relates generally to a computer-implemented video analysis method and system. More particularly, the present invention relates to a computer-implemented method and a system configured to perform video analysis of a video-feed to detect or predict one or more pre-determined patient movements patterns and potentially generating a clinical alarm in response thereto and/or providing other functionality in response thereto.

### Background

In a medical context or setting of for example a healthcare facility such as a hospital or similar, certain patients requires close attention, observation, and monitoring by medical professionals, e.g. due to their medical state or that there is a higher than normal risk that severe and adverse events could happen to a large detriment of the patient. In such cases, quick and prompt medical attention is critical to avoid or at least reduce detrimental issues to the patient. Such patients could e.g. be patients recovering from post-surgery, sedated or comatose patients, seizure prone patients, patients with spinal cord injuries or muscular dystrophy such as amyotrophic lateral sclerosis (ALS), etc. Some patients require more or less 24h a day observation or monitoring by a medical professional or at least for extended time periods of a day.

The crucial observation and monitoring take up resources and much time of the medical staff, even if assisted by certain tools and systems, time that could otherwise be spent for other patients or other tasks.

When monitoring patients for example using video surveillance there are, at least in some countries and regions, strict rules and regulations (e.g. The General Data Protection Regulation (GDPR) for European Union and the European Economic Area and other data privacy regulations e.g. in the United States and elsewhere) to adhere to in order to safeguard the patient's privacy, dignity, etc. There are also rules governing what patient data can be obtained, stored, etc., how, and for how long. It is not a given everywhere that video surveillance of a patient can be obtained or stored, even in a hospital setting.

Practically speaking, in a medical context or setting it is not possible or feasible to monitor or check up on patients at all times - both night and day. Additionally, certain patients will typically not be capable of alerting a medical professional or staff on their own. Furthermore, the time it takes from an incident until receiving medical attention may be critical and it can potentially have very detrimental effects for a patient if no or too late medical attention is provided.

Patent specification US 8,743,200 B2 discloses an activity monitor where a camera obtains a number of images. A Motion Level, representing the amount of change between images, is ongoingly derived by subtracting a current image from a previous image and summing the values of pixels in the resulting image to arrive at a numeric representation of the Motion Level. A derived Motion Level is compared against a Motion Threshold and if the derived Motion Level is greater than the Motion Threshold, a (numeric) Motion Alert Level is increased by a Motion Alert Integrator and otherwise decreased. This will - in case of ongoing motion with no or less non-motion than motion - build-up the Motion Alert Level over time where the Motion Alert Level ongoingly is compared to a Motion Alert Threshold. If there is less motion than non-motion, the Motion Alert Level will decrease over time. In case the build-up Motion Alert Level surpasses the Motion Alert Threshold, an alarm may be triggered. Basically, an alarm is triggered based on all movement (as derived by subtracting images and summing the pixel values in the resulting image). This is fairly noise prone especially in low level lighting. Additionally, the gradual build-up and gradual decrease of levels, respectively, involves an eminent risk of generating false negative alarms (missing a situation where medical attention should have been made) but also false positive alarms (too many alarms). Too many alarms have a high risk of inducing alarm fatigue with the patient and caregiver. Alarm fatigue is announced by the US organisation ECRI and numerous scientific papers as one of the most important predictors for morbidity and mortality within patient monitoring systems. Furthermore, only subtracting images and summing pixel values (even in predefined areas or zones) is generally a very coarse (and too coarse) estimation of movement; in particular for fine(er) movements of a person. Additionally, only overall movement for an entire video frame is estimated.

It would be an advantage to be able to reliably detect or estimate movement data, in particular data representing one or more specific movements, for a person or patient, in particular in a medical professional context. It would also be an advantage to provide such using video analysis of a video-feed (or frames therefrom). Finally, it would be an advantage to provide such patient movement data in a computationally efficient, robust, and/or relatively fast way.

It is an object to provide a computer-implemented method performing video analysis of a video-feed alleviating one or more of the above-mentioned drawbacks, at least to an extent and/or providing one or more of the above-mentioned advantages, at least to an extent.

### Summary

According to a first aspect, this is achieved, at least to an extent, by a computer-implemented method performing video analysis of a (digital) video-feed, where the method comprises the steps of:
- obtaining or extracting a (first) plurality of frames from at least a segment of the video-feed,
- generating pose data for each or a least a predetermined number (i.e. one or more, e.g. two or more) of the plurality of frames, the generated pose data representing at least a part of a patient comprised by at least one, typically a (second) plurality, of the (first) plurality of frames (i.e. the plurality of the frames that the patient is present in),
- processing, by a first patient movement detector or predictor (also simply referred to herein as movement detector or predictor), the generated pose data, and/or first additional data derived on the basis of the generated pose data, to detect or predict at least a first movement of the patient (e.g. or preferably among a plurality of predetermined specific movements) resulting in first movement data representing first movement detection output data.

In this way, it is enabled obtaining patient movement data for a monitored patient in a reliable and robust way. Furthermore, the patient movement detector or predictor can be directed at and optimised for one or more particular, even very specific, movements (having a medical significance in the given context) thereby increasing the accuracy of detection or prediction. This is e.g. in contrast to solutions using Al, machine learning, or similar in a more `catch all' approach feeding an image or frame into an Al or machine learning engine. It is e.g. possible to detect or predict even tiny movements or micro-movements (having a medical significance in the given context) by a suitable movement detector or predictor, e.g. such as facial expressions/contractions, eye movements, mouth movements, etc. e.g. indicating discomfort, change of state, and so on.

In typical context(s), the patient will be present in every frame (currently being processed), as long as the patient is still being monitored and e.g. has not left his/her bed/chair, etc. or observation area). In typical context(s), the patient will typically be present in most of the frames if not all. It is also envisaged that the patient - at least in some contexts - will be monitored both day and night.

Processing pose data of a frame, rather than the image data of the frame also enables a more robust patient movement detection or prediction.

In some embodiments, the computer-implemented method further comprises the step of:
- processing, by at least a second patient movement detector or predictor, the generated pose data, and/or at least second additional data derived on the basis of the generated pose data, to detect or predict at least a second movement of the patient (e.g. or preferably among a plurality of predetermined specific movements) resulting in second movement data representing at least second movement detection output data.

In some embodiments, the at least one second patient movement detector or predictor is configured to execute one or more of:
- detect or predict a hand to face or arm to face movement of the patient and generate the second movement data in response thereto,
- detect or predict a cough-related movement of the patient and generate the second movement data in response thereto,
- detect or predict an arm movement of the patient and generate the second movement data in response thereto,
- detect or predict conditional arm movement of the patient and generate the second movement data in response thereto,
- detect or predict eye movement of the patient and generate data the second movement data in response thereto,
- detect or predict mouth movement patient and generate data the second movement data in response thereto,
- detect or predict a waking and/or sleeping state of the patient over a predetermined period of time and generate data the second movement data in response thereto,
- detect or predict leaving a bed, chair, or resting device and generate data the second movement data in response thereto, and
- detect or predict whether the patient is located in a bed, a chair, or a resting device or not and generate the second movement data in response thereto.

In this way, it is possible to respectively detect or predict a wide range of specific patient movements, each having their respective different medical significance. It is furthermore possible to direct a particular patient movement detector or predictor for a particular need thereby enabling optimisation and specialisation with respect to a particular movement detection or prediction. It is also more readily possible to control and optimise what image/frame data a particular movement detection or prediction processes.

It is envisaged that a method as disclosed herein will implement or support a great number of the movement detectors or predictors, not only one or a few, while that of course is possible.

Furthermore, it is possible to tailor-make which movement detectors/predictors to use and how they should be implemented and function for a large number of visually based monitoring situations of a patient. For example, a number of possible movement detectors/predictors can be implemented and made available or selectable and a relevant number of these can be made active (while the remaining are inactive) e.g. for a particular patent or patient-type thereby customising a particular monitoring to a particular patient or patient type.

In some embodiments, the first patient movement detector or predictor is configured to:
- determine or predict whether there is any movement, or any (meaningful and/or useful) movement in accordance with one or more predetermined criteria, within a particular frame of the (first) plurality of frames compared to at least another adjacent frame of the (first) plurality of frames and generate the first movement data in response thereto.

In some embodiments, the functionality of the first patient movement detector or predictor is carried out, resulting in the first movement data, before the functionality of the at least one second patient movement detector or predictor, and where whether the functionality of the at least one second patient movement detector or predictor is carried out or not is dependent on the first movement data so that the functionality of the at least one second patient movement detector or predictor, or a part thereof, is not carried out if the first patient movement detector or predictor does not detect or predict any (meaningful and/or useful) movement in accordance with the one or more predetermined criteria.

In some embodiments,
- the method further comprises deriving data representing a contour or boundary for a frame in response to the generated pose data of that frame, the contour or boundary defining an area around at least a part of the patient being present in that frame, and
- wherein the first movement data representing first movement detection output data and/or the second movement data representing second movement detection output data is/are derived processing data of the frame within the derived contour or boundary.

In some embodiments,
- the method further comprises determining or designating the pixels or parts of a particular frame that constitutes a foreground of the particular frame, and
- the first movement data representing first movement detection output data and/or the second movement data representing second movement detection output data is/are derived processing data of the particular frame determined or designated to constitute the foreground of the particular frame.

In some embodiments, the method further comprises automatically turning off the video-feed, and thereby the processing of the frames of the video-feed, when it is detected that another person than the patient is present in at least one frame of the (first) plurality of frames. This could e.g. be when a medical professional or a relative is captured by the video-feed. In this way, it is possible to preserve the privacy of the patient (e.g. when talking with relatives), data privacy regulations, etc.

In some embodiments, the wherein the method further comprises logging and storing detected or predicted movements of the patient in response to the first movement data representing first movement detection output data and/or the second movement data representing second movement detection output data.

In some embodiments, the computer-implemented method further comprises the step of:
- automatically triggering a clinical alarm on one or more user devices, each user device associated with a respective predetermined medical professional, in response to the generated first and/or second movement data.

In some embodiments, the clinical alarm is triggered firstly on a first group of the user devices and secondly is escalated and triggered on a second group of the user devices if no acknowledgement is received from at least one of the first group of user devices within a predetermined period of time from triggering the clinical alarm on the first group of user devices.

In some embodiments, the method comprises providing a live-feed or a substantial live-feed to a first user device the clinical alarm was triggered on.

In some embodiments, the video-feed is obtained by a video camera where the video camera is arranged to capture video of a predetermined observation or monitoring area or space, the observation or monitoring area or space e.g. or preferably comprising a bed, chair, or other resting device assigned to the patient in a health care facility.

In some further embodiments, wherein the video camera is arranged above a bed or other resting device assigned to the person or patient where the video camera is further arranged to have its capture direction substantially perpendicular to a substantially horizontal extent of a top of the bed.

In some embodiments, the pose data comprises a predetermined number of skeleton or connection points and e.g. respective connections therebetween. In some further embodiments, the pose data comprises a set of 2D (or 3D) coordinates for each skeleton or connection point and a label or other identifier designating which body part of the patient the skeleton or connection point relates to (e.g. left knee, right hand, left eye, etc.).

In some embodiments, the computer-implemented method performing video analysis of a video-feed comprises
- obtaining or receiving data representing additional sensor data from one or more additional sensors,
- providing at least a part of the data representing additional sensor data to one or more of the first patient movement detector or predictor and the at least one second patient movement detector or predictor and generate the first and/or second movement data also in response thereto.

The sensor data may also be received (in addition or alternatively) by a decision or handling step or element receiving and processing the first and/or second data, which may use it to process the first and/or second data or use it another way - e.g. triggering an alarm.

In some embodiments, the one or more additional sensors comprises one or more of: an electrocardiography (ECG) sensor, a thermal or temperature sensor, a pulse oximetry sensor, a pulse sensor, a blood pressure sensor, and a sensor of one or more vital signs.

In preferred embodiments, none of the patient movement detectors/predictors is based on machine learning (ML), artificial intelligence (Al), or the like but rather specifically programmed to process image data (and data derived therefrom like pose data) to determine or predict a particular movement or movement pattern. It is noted that deriving the pose data may involve machine learning (ML), artificial intelligence (Al), or the like.

According to a second aspect an electronic data processing system is provided that comprises
- one or more processing units connected to an electronic memory, and
- one or more signal transmitter and receiver communications elements for communicating via a computer network,
wherein the one or more processing units are programmed and configured to execute the computer-implemented method according to the first aspect and/or embodiments, thereof as disclosed herein.

Further details and embodiments are disclosed in the following.

### Definitions

All headings and sub-headings are used herein for convenience only and should not be constructed as limiting the invention in any way.

The use of any and all examples, or exemplary language provided herein, is intended merely to better illuminate the invention and does not pose a limitation on the scope of the invention unless otherwise claimed. No language in the specification should be construed as indicating any non-claimed element as essential to the practice of the invention.

This invention includes all modifications and equivalents of the subject matter recited in the claims appended hereto as permitted by applicable law.

### Brief description of the drawings

Figure 1 schematically illustrates aspects of video analysis as disclosed herein;
Figure 2 schematically illustrates exemplary embodiments of computer-implemented video analysis, as disclosed herein, in an overall way;
Figure 3 schematically illustrates exemplary embodiments of computer-implemented video analysis, as disclosed herein, in a more detailed manner;
Figure 4 schematically illustrates a flowchart of exemplary embodiments of computer-implemented video analysis and clinical alarm handling in response thereto, as disclosed herein;
Figures 5A, 5B, 5C and 6A respectively schematically illustrates an exemplary image or frame of a sequence of images or frames of an obtained video with exemplary derived pose data superimposed thereupon;
Figures 6B - 6H schematically illustrate different examples of video processing and analysis of different patient movement detectors/predictors as disclosed herein; and
Figure 7 schematically illustrates a functional block diagram of embodiments of an electronic data processing device or system configured to generate one or more movement detection outputs and/or implementing various embodiments as disclosed herein.

### Detailed description

Various aspects and embodiments of a computer-implemented video analysis method and an electronic data processing device or system configured to execute the computer-implemented video analysis method as disclosed herein will now be described with reference to the figures.

The shown figures are schematic representations for which reason the configuration of the different structures as well as their relative dimensions are intended to serve illustrative purposes only.

Some of the different components are only disclosed in relation to a single embodiment of the invention but is/are meant to be included in the other embodiments without further explanation.

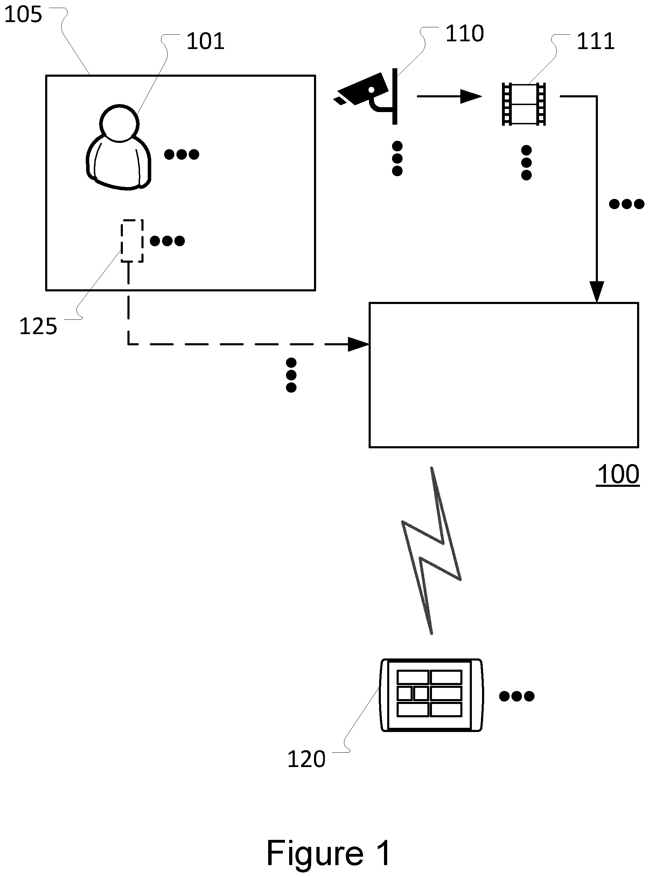

Figure 1 schematically illustrates aspects of video analysis as disclosed herein.

Schematically illustrated is an observation or monitoring area or space 105 comprising one or more (e.g. a plurality of) persons 101 to be observed or monitored by one or more (e.g. a plurality of) video cameras 110.

The persons 101 may e.g. or preferably be patients located in a healthcare facility such a hospital or other types of healthcare facilities. Alternatively, a person 101 (then typically only one) may be located at home.

In some embodiments/use scenarios, where the person(s) 101 is/are more or less bedridden patients (e.g. bedridden trauma patents), bed laying patients (e.g. sleeping or recovering patents), chair-'bound' patients, or other types of patients, there is a need or wish to observe or monitor the person(s) 101, e.g. in order for a healthcare or medical professional (herein also referred to as simply a medical professional) to be able to react quickly in case a detrimental or potentially detrimental situation arises or is likely to arise. Such persons may e.g. be hospitalised recovering patients that should be kept under potentially close observation. Chair-bound patients include patients that are sitting for prolonged periods in chairs or other suitable resting devices but may need the same or more or less the same attention or care as bedridden patients.

The observation or monitoring area or space 105 may e.g. be a (trauma) recovering room, an observation room, a patient room, or similar, or a part thereof. The observation or monitoring area or space 105 may also be a sub-area or sub-space e.g. around or comprising a single bed or a single chair or other resting device for a single patient, where an overall room then may comprise one or more such areas or spaces 105, e.g. one for each patient/bed/chair, etc. to (potentially) be monitored. Alternatively, the observation or monitoring area or space 105 may e.g. be a room in a private home or a sub-area or sub-space thereof.

Each video camera 110 provides a respective (e.g. live) feed preferably in the form of a digital video 111 that is transmitted (wirelessly or by a wired connection) to a receiving and/or processing system 100 as disclosed herein. The feed(s) from the camera(s) 110 may alternatively be analogue and may then be digitised at a later point before relevant data processing.

In some preferred embodiments, there is a video camera 110 (providing a respective feed/digital video 111) for each person 101 to be observed or monitored. Alternatively, a single video camera 110 may provide a feed of two or more persons 101, although that may be at the expense of some detection reliability. In some further embodiments, the feed/digital video 111 of a plurality of cameras 110 may be of a single person 101 (typically then from different angles) e.g. increasing detection reliability but then adding complexity both in terms of necessary equipment and data processing. According to the present context, it has not been found necessary (at least for some/most use cases) to obtain a feed/digital video 111 by a plurality of cameras 110 for a single person 101.

Preferably (at least in some use cases), the digital video(s) 111 is/are provided by respective wired connections to the receiving and/or processing system 100 to reduce potential lag and/or reduce potential interference with other medical equipment. The video feed 111 may e.g. be infrared when obtaining of the patient during night time.

The receiving and/or processing system 100 may be configured to receive digital video from a plurality of video cameras 110 even arranged in different rooms and locations of an overall facility. Alternatively, one receiving and/or processing system 100 is provided for each of several rooms (having persons to be monitored or observed). The receiving and/or processing system 100 may also be located off-site with intermediate receiving units located on-site, although preferably the receiving and/or processing system 100 is located on-site at the overall facility.

In preferred embodiments, one video camera 110 is arranged to monitor one person 101 where the video camera 110 is arranged above a bed for the person to be in (when being monitored) and e.g. or preferably arranged substantially perpendicular (with its direction of 'vision') to the extent (as seen from above) of the bed. This will distort the obtained video as little as possible with respect to viewing angle of its field of vision, which in turn will promote an increase of the quality of the subsequent video analysis as disclosed herein. The video camera 110 may be located centrally (as seen from above) in relation to the bed or alternatively it may be shifted a suitable amount towards the end of the bed where the feet of the patient are to be and then angled an amount towards the head of the patient. The video camera(s) 110 may be fixed to the ceiling e.g. on a support therefrom or the like. Video camera(s) 110 may also be able to move (pan/tilt). Alternatively, the video camera(s) 110 may be arranged in other ways, as long a video feeds can be obtained that have sufficiently good quality for the subsequent video analysis, as disclosed herein, in a reliable way.

In alternative preferred embodiments, one video camera 110 is arranged to monitor one person 101 where the video camera 110 is arranged in relation to a chair or other resting device for the person to be in (when monitored) and e.g. or preferably arranged substantially perpendicular (with its direction of vision) towards the face and front of a person when sitting in the chair or other resting device.

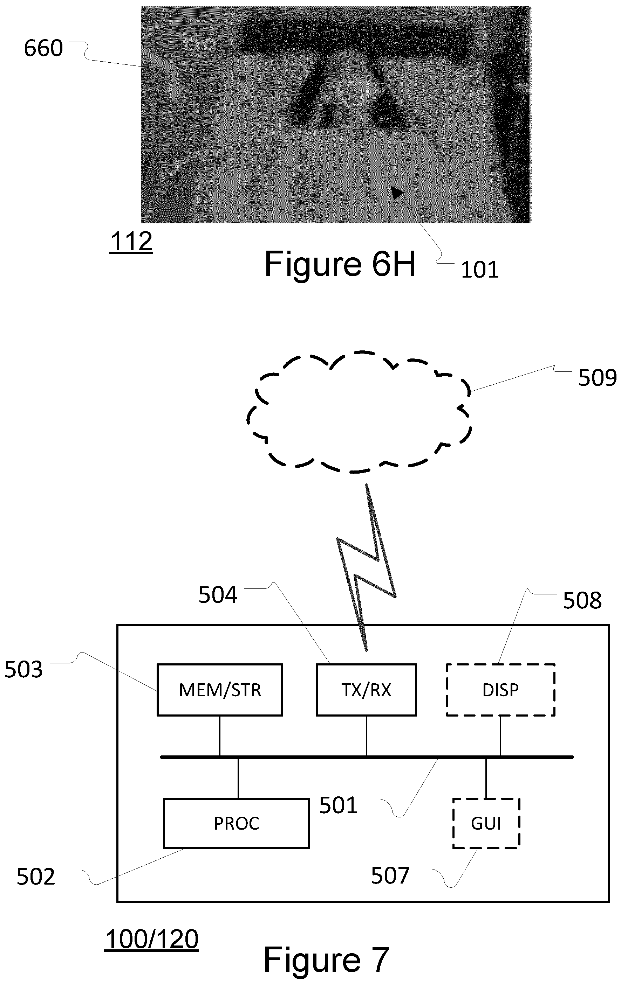

The receiving and/or processing system 100 is configured to, as disclosed herein, analyse one or more of the received digital videos 111 to (potentially) detect one or more specific particular movements, in particular one or more of specific particular movements (among a plurality of predetermined specific movements) of an observed or monitored person 101 and may be further configured to trigger one or more clinical alarms to one or more medical professionals in response thereto in case the detected movement(s) (according to the analysis) warrant that. The receiving and/or processing system 100 may be a single unit or element or it may be two (or more) distinct separate units or elements (see e.g. 100 in Fig. 7).

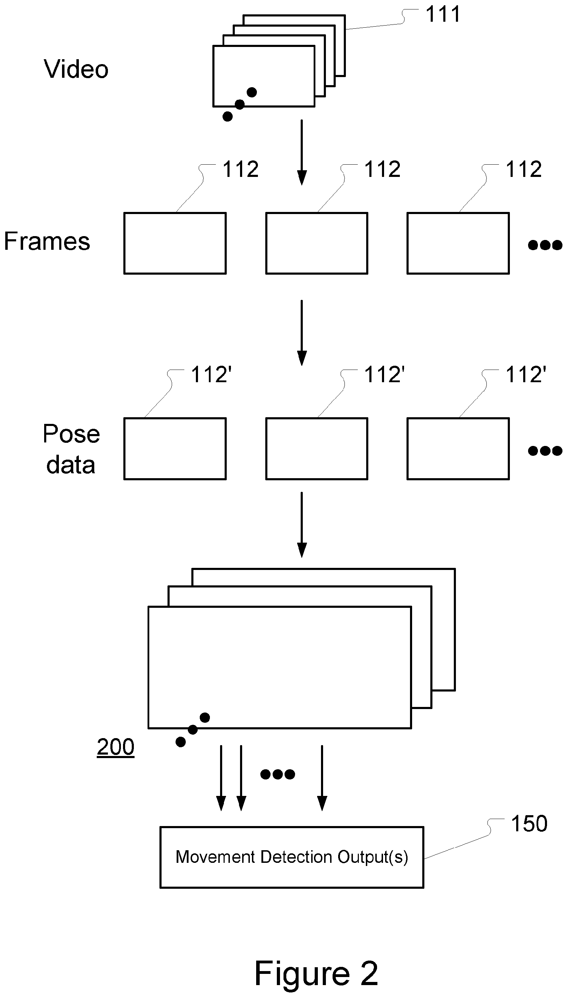

Embodiments of detecting or predicting one or more certain movements (and potentially triggering a clinical alarm in response thereto) are disclosed herein and e.g. explained further in connection with Figures 2 - 7.

When analysis of a digital video 111 as disclosed herein detects or predicts one or more certain movements, the receiving and/or processing system 100 is, at least in some embodiments, configured to provide one or more clinical alarms to one or more user devices 120 (e.g. in additional to a central system or device), where each user device 120 e.g. or preferably is associated with a medical professional on duty such as a nurse, a primary nurse or a nurse in charge, a doctor, and/or another type of medical professional. The user device(s) 120 preferably comprises a display and may e.g. be a smart phone, a tablet, a wearable, or the like.

In some (further) embodiments, a clinical alarm is provided to (user devices of) different groups or types of recipients depending on a type or category of the triggered clinical alarm. For example, one type or category may be notified to a first group of recipients while another type or category may be notified to a second group of recipients. The types or categories may e.g. be for different severities and/or urgencies. One recipient group may e.g. comprise one or more nurses currently on duty (receiving relatively 'low' level alarm(s) and e.g. relatively 'middle' level alarm(s)) while another group may comprise one or more primary nurses on duty (receiving relatively 'middle' level alarm(s) and/or relatively 'high' or 'critical' level alarm(s)) and a further group may comprise one or more doctors on duty (receiving relatively 'high' or 'critical' level alarm(s)). It may also be that the group of primary nurses or similar receives both `middle' and 'high' alarms and then decides whether to notify a doctor, e.g. using his/her user device 120 or in another suitable way.

In some embodiments, additional relevant information or data is provided to the user device(s) 120 in question (e.g. together with the notification of an alarm) such as data representing one or more of: the current location (e.g. room and/or bed or chair number or other identifier) of the person the alarm was triggered for, the name or other identifier of the person in question, an indication of the level or severity of the alarm, medically related facts of the person in question, etc. In some embodiments, the notification of an alarm further includes providing a live/current feed of the monitored patient (that the alarm was triggered for) on the user device 120 (e.g. in response to acknowledging the alarm) or at least an option thereof. In this way, a medical professional receiving/acknowledging an alarm may be able to remotely and immediately observe the person the alarm was triggered for.

In some embodiments, the respective user device(s) 120 is/are each configured to be able to obtain or receive an acknowledgement indication or similar (acknowledging receipt of an alarm in question) from the medical professional associated with the respective user device 120 via an appropriate user interface and to provide data relating to the acknowledgement indication or similar (once/if given) to the receiving and/or processing system 100 for further use and e.g. logging thereof.

In some further embodiments, a triggered clinical alarm is 'escalated' by the receiving and/or processing system 100 if not properly reacted to or acknowledged within a predetermined time period, e.g. or preferably about 20 to about 30 seconds or another suitable amount. The time period before escalation may depend on the type of alarm (and e.g. (potential) severity thereof). The escalation may involve further actions, e.g. notifying the triggered alarm to another or larger group of recipients, e.g. to all associated medical professionals on duty (associated with the patient or the room or ward of the patient) and/or to associated medical professionals being from a higher level group or type - for example: nurse -> primary nurse -> doctor; nurse associated with the patient the alarm has been triggered for -> all nurse on duty -> primary nurse -> ... ; and etc. The further actions may e.g. also depend on the type of alarm (and e.g. (potential) severity thereof).

In some embodiments, the notification of the clinical alarm may be shared or forwarded to other recipients by the receiving medical professional (e.g. in response to acknowledging the alarm).

In some further embodiments, the receiving and/or processing system 100 is further configured to receive input from one or more additional (optional) sensors 125 and to detect or predict the one or more movements taking into account also data obtained from such one or more additional sensors 125. The additional sensor may e.g. be a sound capturing device, such as a microphone but may then be an issue in relation to data privacy regulations, the privacy of the patient, etc. Alternatively or additionally, the sensor(s) may be one or more of sensors providing one or more of: ECG data, thermal or temperature data, pulse oximetry data (saturation), pulse data, blood pressure data, or other data representing other vital sign data, etc.

The one or more additional sensors may e.g. be located (one or more thereof) in the vicinity of a person, be located on the person, be connected to the person, and/or any combinations thereof.

The data processing of receiving and/or processing system 100 may and preferably is configured to carry out certain preprocessing of the video 111 (the frames thereof) e.g. as explained further herein (e.g. in connection with Fig. 2, etc.).

In some expedient embodiments, the data processing of receiving and/or processing system 100 is configured to generate or derive pose data of the observed or monitored person or patient for each, some, or preferably all of the frames 112 (that the observed or monitored person or patient is present in) and carry out subsequent data processing (i.e. patient movement detection or prediction; see e.g. also 200 in Fig. 2, etc.) using the pose data rather than the image data of a frame of the video 111, at least for some of the movement detectors/predictors and e.g. most or all of them. Processing pose data rather than image data saves computational `effort' and thereby electrical power.

Using pose data for processing (rather than image data obtained by a camera of a patient) also promotes the protection of privacy for the patient and adherence to data privacy regulation, etc. as pose data cannot in itself be used to identify any physical person.

In some embodiments, a log of detected movements is kept and stored (rather than storing obtained video material or images), which again promotes the protection of privacy for the patient and adherence to data privacy regulation, etc. as the log of detected movements cannot in itself be used to identify any physical person.

Figure 2 schematically illustrates exemplary embodiments of computer-implemented video analysis, as disclosed herein, in an overall way.

Illustrated is (digital data representing) a video 111 or a segment thereof that is to be analysed by a computer-implemented video analysis method or an electronic data processing system executing the computer-implemented video analysis method, both as disclosed herein.

The video 111 is provided (e.g. or preferably provided by a video camera as explained in connection with Figure 1 or as otherwise disclosed herein) and contains (during use) digital image data of a monitored or observed person or patient (see e.g. 101 in Figure 1, etc.). The format of the video 111 may be any suitable video format and the video 111 may be a real-time or substantially real-time live feed. Alternatively, another frequency of obtaining images of the video may be used, e.g. as disclosed herein. A suitable part or segment of the video 111 may ongoingly be buffered or similar e.g. by a receiving and/or processing system such as the one shown and explained in connection with Figure 1 (see 100 in Figure 1) or as otherwise explained herein.

Further illustrated is (digital data representing) a predetermined number of processing frames 112, i.e. frames 112 of the video 111 to be processed by the computer-implemented video analysis method/the electronic data processing system executing the method, both as disclosed herein, where the processing frames 112 are extracted from or provided using the video 111 (e.g. the buffered segment or part thereof) in any suitable way as generally known. The processing frames 112 are to be used for the video analysis as disclosed herein.

One processing frame 112 may be extracted or provided for each overall (video) frame of the video 111 that otherwise typically would be displayed on a screen to a user when 'normally' viewing the video 111. In other embodiments, only a subset of the overall (video) frames are extracted as processing frames 112, which will reduce processing time and processing effort/power usage and will typically still generate fully usable end results. For example, it may e.g. be only every second, every third, every fourth, and so on (or any other suitable number) overall (video) frame that is extracted or provided as a processing frame 112. Alternatively or additionally, the extracted processing frames 112 may be up-/down-scaled, or extrapolated from the overall frames. The number of extracted frames for a given segment or part of the video 111 may e.g. depend on characteristics or properties of the video, e.g. extracting a higher number of processing frames 112 for segments or parts of the video involving more frame to frame differences or change than other segments or parts.

The specific predetermined number of processing frames 112 that are extracted or provided (for a respective time window) as input for the video analysis may depend on actual use and/or implementation. In some embodiments, a camera obtains a video at for example 25 or 30 frames pr. second whereby 50 or 60 frames, respectively, are extracted or provided corresponding to 2 seconds (or about 2 seconds) of length or time of the video. In other words, a predetermined number of frames 112 (or frames 112 of a predetermined length) of the video 111 is obtained as a consecutively derived segment of the video (comprising the predetermined number of frames) and is used for the video analysis as disclosed herein and explained further in the following. It is to be understood that the number of frames pr. second and/or the time length may be different according to specific embodiment/use. In some embodiments, one segment is provided for video analysis at a time without any overlap of frames between them. In alternative embodiments, segments are provided with some overlap of frames between them, i.e. a rolling window.

In some embodiments, the number of frames that is provided as input to the video analysis is about 4 - 10 frames per second, e.g. about six or six frames per second., but the number may vary (may both be less and more than six frames). The frames may be extracted from a video obtained by a camera e.g. obtaining images at 25 or 30 Hz or alternatively the camera directly obtains that number of frames/images per second.

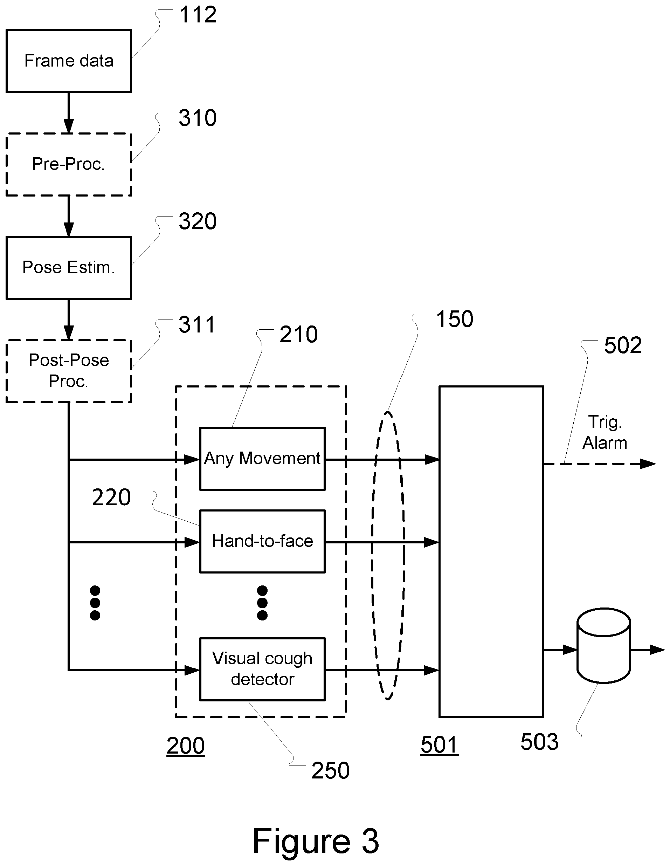

In some embodiments, the processing frames 112 (or a subset of the processing frames) of a video segment are directly provided to one or more, e.g. or preferably a plurality of, patient movement detectors/predictors (also simply referred to as movement detectors/predictors) 200 (see e.g. also 200 in Fig. 3, etc.) for detection or prediction of respective person/patient movements, as disclosed herein, resulting in (data representing) one or more movement detection outputs 150. The data representing one or more movement detection outputs 150 is also referred to herein as first movement data and second movement data.

In alternative and preferred embodiments, rather than providing the processing frames 112 to the patient movement detectors/predictors 200, pose data 112' (see e.g. also 320 in Fig. 3) of the observed or monitored person or patient is derived for each, some, or preferably all of the frames 112 (that the observed or monitored person or patient is present in) and is provided to the movement detectors/predictors (to provide the one or more movement detection outputs 150) instead of providing the processing frames 112. In some embodiments, one or some of the movement detectors/predictors receives (and process) processing frames 112, while one or some of the other detectors/predictors receives (and process) pose data 112'. In some cases, one or more detectors/predictors may receive (and process) both the processing frames 112 and the pose data 112'.

The pose data 112' may be derived in any suitable way. In some embodiments, the pose data 112' may e.g. or preferably be or represent `skeleton' points or similar or other connection points (and e.g. respective connections between them) of a person detected (in full or in part) in the frame 112 where the pose data 112' may be determined by suitable video analysis or other analysis, typically respectively for each frame 112, as generally known by identifying or estimating respective body parts of the person/patient. Basically (at least in some embodiments), a more or less advanced 'stick' figure representation of the person/patient is generated. Pose data may e.g. be derived using Google's ML Kit that comprises tools for real time human pose data generation given a frame or sequence of frames, OpenCV's pose estimation tool (also referred to as Keypoint Detection), Pose landmark detection under Google's Mediapipe framework, etc.

The skeleton points or similar together represent an actual pose of the person/patient of the video/frames and can be tracked across these. Accordingly, a number of skeleton points (and e.g. respective connections) are derived for each provided frame. Using the pose data 112' instead of the frames 112 reduces the amount of input data to the movement detectors/predictor(s) 200, simplifies the data processing, and increases the likelihood of good quality output as it is simpler and more reliable to use the movement detectors/predictor(s) 200 with skeleton points (and e.g. connections) than using the image data of the frames 112 or video 111. It is much simpler and more reliable tracking such pose data 112' over time than tracking image data over time.

In some such embodiments, data for the skeleton points may e.g. comprise respective data representing one or more, e.g. some or all, of: the head, neck, right shoulder, right elbow, right wrist/hand, left shoulder, left elbow, left wrist/hand, central point or root, right hip, right knee, right ankle/foot, left hip, left knee, left ankle/foot and spatial coordinates (in 2D or 3D) for each skeleton point. Additionally, the pose data 112' may further comprise relevant connections between the skeleton points. Accordingly, the pose data 112' may e.g. further comprise data representing connections between one or more, e.g. some or all, of: between head<->neck, neck<->right shoulder, neck<->left shoulder, neck<->central point/root, right shoulder<->right elbow, right elbow<->right wrist/hand, left shoulder<->left elbow, left elbow<->left wrist/hand, central point/root<->right hip, central point/root<->left hip, right hip<->right knee, right knee<->right ankle/foot, left hip<->left knee, and left knee<->left ankle/foot. It should be noted that the skeleton points/connection points and connections both may be fewer than listed and/or may comprises additional ones.

In some embodiment, coordinates in three dimensions (X, Y, Z) are obtained or derived for each skeleton or connection point. In some embodiments, only coordinates in two dimensions (X, Y) is obtained or derived (or used). This may be sufficient for the one or more movement detectors/predictors as disclosed herein (or at least some of them), in particular if the video 111 (and thereby the frames 112) has been obtained at a suitable angle with respect to the camera's direction of 'vision', such as more or less perpendicular to the extent of the patient's face/front in a bed, chair, and so on.

In some further embodiments, data representing individual features of the person's/patient's face is also derived, e.g. 'skeleton' points for each eye, one or more points for the mouth, etc. Facial characteristics over time have shown especially significant or useful for reliable determination or prediction of certain relevant movements.

Skeleton may also be referred to as landmarks, landmark points, or similar.

Tracking such detected points over time enables a reliable tracking of the change of pose or movement of individual limbs of the person/patient and thereby enable reliable and robust determination or prediction of particular relevant movement(s) as disclosed herein.

In some further embodiments, data obtained from one more additional sensors is used alternatively or in addition to the pose data 112' to determine the movement detection data/output(s) 150, or at least one or some thereof. Such sensor data may e.g. be or include (a segment of) real-time audio data obtained by a microphone (e.g. comprised by the camera) located in the vicinity of the person/patient correlated in time with the obtained video, however it may pose an issue in relation to the privacy of the patient, data privacy regulations, etc.

As explained herein, the generated movement detection output data set(s) or value(s) 150 - generated by one or more movement detectors/predictors 200 - may be used to trigger a clinical alarm or similar to one or more medical professionals in case the output data set(s) or value(s) 150 is determined or analysed (by the method/system 100) to warrant that.

Figure 3 schematically illustrates exemplary embodiments of computer-implemented video analysis, as disclosed herein, in a more detailed manner.

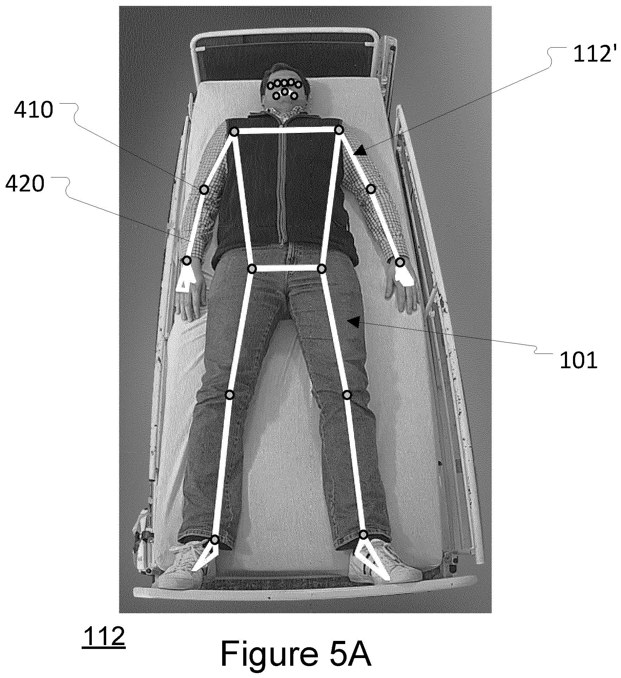

Illustrated is a functional block diagram of embodiments of computer-implemented video analysis, as disclosed herein where frame data 112 is obtained or provided on the basis of video data as disclosed herein (e.g. as explained in connection with Fig. 1). The frame data 112 is provided to a pose estimator 320 deriving pose data (see e.g. 112' in Figs. 1, 5A-C, etc.) for the provided frame(s) 112. The pose data may be derived in any suitable way, e.g. or preferably as disclosed herein and in particular as disclosed in connection with Figure 2.

In some further embodiments and as illustrated, one or more optional pre-processing stages 310 may process the frames 112 prior to being provided to the pose estimator 320 and may involve one or more pre-processing stages or algorithms enhancing one or more of the subsequent stages, in full or in part.

The pre-processing 310 may e.g. include converting the video data of the frames 112 to greyscale rather than colour as typically obtained by a video camera. This has been seen to increase/enhance the detection or prediction of at least some movement detectors/predictors.

The pre-processing 310 may e.g. include converting the video data of the frames 112 to greyscale or converting a copy of the video data of the frames to a fine blur version. The pre-processing 310 may, additionally or alternatively, e.g. include converting the video data of the frames 112 to greyscale or converting a copy of the video data of the frames to a coarse blur version. Blur is used to reduce noise in the frame data.

The pre-processing 310 preferably also comprises a step or stage determining what (pixels) in a frame 112 constitutes (according to the applied processing process or algorithm) foreground and background of the particular frame. In some embodiments, this determination is done on a pixel level, i.e. each pixel is determined to be either a foreground pixel or a background pixel. The foreground and background detection may include 'cleaning' or optimising the result, e.g. by converting isolated pixels, i.e. from foreground to background (e.g. if one or a few foreground pixels otherwise is surrounded or dominated by background pixels) or from background to foreground (e.g. if one or a few background pixels otherwise is surrounded or dominated by foreground pixels). In most cases, the image processing mentioned herein is based on parts of the image determined to belong to the foreground, but in some cases it is not, e.g. when processing infrared images (e.g. as obtained by monitoring the patient at night-time or lights out).ᵢ

In applicable embodiments, the resulting foreground/background image data is provided to the pose estimator 320 to derive the pose data. In preferred embodiments, the pose data is only derived for the foreground pixels/image data, i.e. the background pixels/image data are ignored/not processed. Accordingly, deriving the foreground/background image data and using 'only' the foreground pixels/image data (for pose estimation) reduces the amount of data that the pose estimator 320 need to process thereby reducing power consumption and speeding up processing time, which is significant in particular for real-time or substantially real-time data processing enabling real-time or substantially real-time monitoring of (and potentially alarm triggering for) a person/patient. Apart from reducing the amount of data, it has also been seen that the accuracy of the pose estimator may, and often will, increase by deriving pose data for only the foreground pixels/image data as potential noise is removed. Noise can e.g. be present due to shadows, e.g. caused by another person entering or moving around in the room, etc. Such shadows would be typically not be detected to be the foreground part of the frame data.

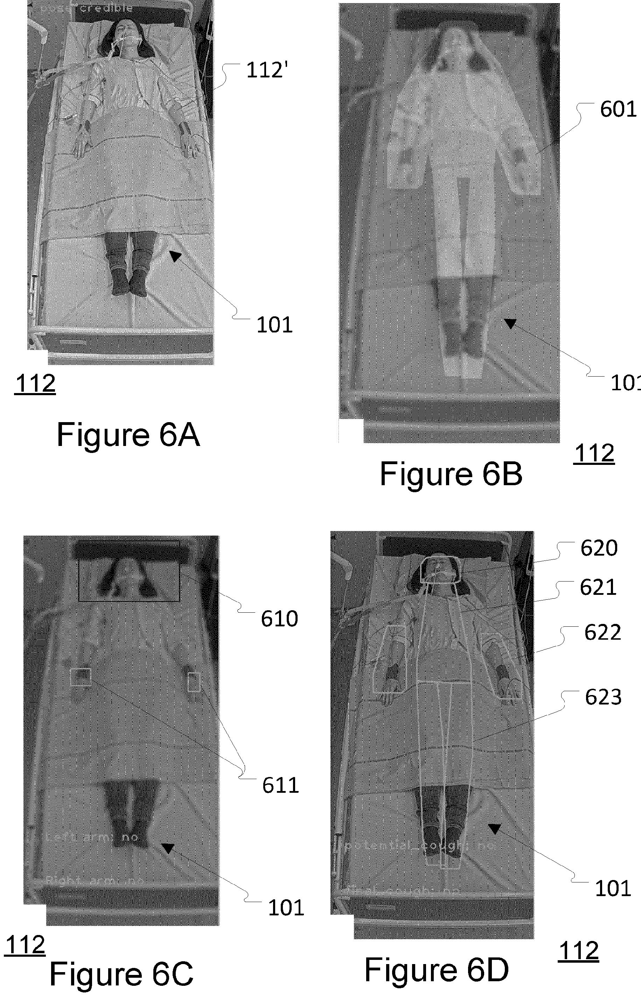

Exemplary derived pose data is e.g. illustrated in Figs. 5A-C and 6A.

The derived pose data (e.g. or preferably together with derived additional data such as a foreground or background indication, etc.) is provided to one or more, e.g. or preferably a plurality of, movement detectors/predictors 200 for further processing (in order to determine or predict different respective person/patient movements).

In some embodiments, the pre-processing 310 (or another stage or element) comprises, as a first stage or at least an early stage, checking whether there are sufficient changes (e.g. compared to a predetermined threshold) across two or more of the provided frames 112, e.g. across all the frames 112. This determines whether there are sufficient movement in the obtained frames 112 to warrant further processing to determine one or more movements. If there are not (substantial or sufficient) changes of the frames there is no (substantial or sufficient) patient movement therein. This may be done in various ways. In some embodiments, this is done by comparing the total number of pixel changes in relation to a predetermined threshold. In case of no sufficient movement, the rest of the processing pipeline may be kept inactive (or at least some parts of it). Alternatively, the frame data may still be provided to some movement detectors/predictors 200 as it may be beneficial with respect to movement detection quality to keep a buffer or similar of consecutively or time-ordered derived frames, e.g. to avoid frames 'jumping' significantly in time, and/or to have the buffer adequately filled.

In some further embodiments and as illustrated, one or more optional post-pose processing stages 311 may process the output of the pose estimator 320 (e.g. including the frames 112) prior to being provided to the one or more, e.g. or preferably a plurality of, movement detectors/predictors 200 and may involve one or more stages or algorithms enhancing one or more of the subsequent stages, in full or in part.

In some embodiments, the post pose processing stage(s) 311 may e.g. include deriving a contour or boundary (i.e. contour or boundary data) of the person/patient's full body (or at least the visible or detectible part) in the frame 112 (see e.g. Fig. 6B illustrating a frame 112 with a derived contour or boundary 601 imposed thereon for illustrative purposes). The contour or boundary (i.e. contour or boundary data) of the person/patient's full body may be used to optimise the movement detection or prediction as disclosed herein and explained further in the following. The contour or boundary is typically dynamically derived across the various frames 112, i.e. the contour or boundary is derived for each frame 112. In some preferred embodiments, the contour or boundary for a particular frame is derived on the basis of the derived pose data of the particular frame. This might e.g. be done by designating or deriving an area around the pose data (e.g. around the skeleton/connection points and e.g. the connections therebetween within a predetermined distance or range e.g. by a predetermined number of pixels or a predetermined real world length or a multiple of a length or size of a body part of the person/patient in the particular frame (e.g. a hand's breadth, or a portion thereof, or similar).

The post pose processing stage(s) 311 may process the foreground/background data, the frame data 112, and/or additional data including any combinations thereof.

In some embodiments, the post pose processing stage(s) 311 derives a grey-scale version (if not done already at the pre-processing stage 310), a fine blur version, and a coarse blur version of the frames 112, which then may be used (one or more thereof) for subsequent processing.

The output of the pose estimator 320 (or alternatively/additionally the output of the post pose processing stage(s) 311) is provided to one or more, e.g. or preferably a plurality of, movement detectors/predictors 200, as disclosed herein, generating one or more movement detection outputs 150.

As disclosed herein, video analysis is performed by one or more movement detectors/predictors 200 to detect or predict one or more pre-determined patient movements/movement patterns. In some embodiments, a number or a plurality of (e.g. pre-processed) frames 112 (and their derived pose data) is provided to the one or more movement detectors/predictors 200. This provides a buffer of data (i.e. a buffer of consecutively obtained or extracted frames and their respective related data), which typically promotes the processing quality and thereby the detection or prediction of the respective movement(s).

One beneficial movement detector/predictor may e.g. be an "any movement" detector or predictor 210 that determines or predicts whether there is any movement or any meaningful or sufficient movement within a particular frame compared to other frames. For that, the "any movement" detector or predictor 210 may analyse a plurality of consecutively or time-ordered derived frames 112 to determine whether there is any movement (e.g. movement within a certain tolerance) across a number of these frames. When determining or predicting movement, the process may e.g. look back (look at one or more (timewise) previous/earlier frames), look ahead (look at one or more (timewise) following/later frames), or a mixture thereof of (looking at both earlier frame(s) and later frame(s) for a particular frame) when determining or predicting movement for the particular frame. In a sense, the frames being analysed can be a moving window or segment of a stream or sequence of provided frames (may be the case for at least one/some or all of the movement detectors/predictors 200). Some embodiments of an "any movement" detector or predictor 210 is illustrated further e.g. in connection with Figure 6B.

In some embodiments, the "any movement" detector or predictor 210 only determines or predicts movement in parts or pixels of a particular frame 112 that is designated as being part of the foreground (e.g. or preferably as derived by the pre-processing stage 310). This will save computational "effort" and power consumption as less data needs to be processed for potential movement. Furthermore, it also increases the reliability, robustness, and usability of the "any movement" detector or predictor as it has been seen that false positives (i.e. determination of movement that really is not relevant movement even though determined to be) is significantly reduced or avoided, in particularly in a medical context of a patient recovering room or patient observation room such as the present. For example, detected movement due to shadows is avoided or reduced. Such shadows may e.g. arise when a person opens a door to the room of the patient, turns on the light in the room, and/or when a person moves about in the room (even outside the camera's field of vision).

The "any movement" detector or predictor 210 may be used to signal to the overall processing system or method (and/or the other movement detectors/predictors 200), whether it makes sense to carry out any processing or not. If there is not detected or predicted any movement (at least within a predetermined threshold) by the "any movement" detector or predictor 210, the other movement detectors/predictors 200 (or at least one or some of them) will not carry out their processing. Meta data signifying or flagging whether the "any movement" detector or predictor 210 determined or predicted any movement for a particular frame (e.g. "YES" or "1" if any movement was detected/predicted or otherwise "NO" or "0" or any other suitable arrangement) may be appended or associated with the particular frame and when another subsequent movement detector/predictor 200 receives the particular frame for processing, it checks the meta data and only carries out processing in case the "any movement" detector or predictor 210 determined/predicted any (sufficient) movement (e.g. in case of "YES", "1", etc.). This will save computational "effort" and power consumption.

Accordingly, the "any movement" detector or predictor 210 may also be arranged first in the chain of processing elements 200, i.e./e.g. after the pose estimator 320 or after the post pose processing stages 311 (if such exist) and before the other movement detectors/predictors 200 (even though it is illustrated in Fig. 3 as fully parallel to the other movement detectors/predictors 200).

In some embodiments, the frames 112 and associated data (e.g. pose data) and meta data still provided to the other/subsequent movement detectors/predictors 200 even if the "any movement" detector or predictor 210 detected/predicted no (significant) movement, as it may beneficial to keep a buffer or similar of consecutively or time-ordered derived frames, e.g. to avoid frames 'jumping' significantly in time, and/or to have a buffer adequately filled.

It is noted that certain use scenarios may involve monitoring a person/patient laying in a bed, sitting in a chair, etc. e.g. during the night where it is expected that not a large proportion of the obtained frames will include (sufficiently significant) movement (but where the frames that contain movement can matter a lot).

Another beneficial movement detector/predictor (in particular in a medical context) may be a "hand-to-face movement" or "arm-to-face movement" detector or predictor 220 that determines or predicts patient movement involving moving at least one of the patient's hands to or towards the face (and thereby mouth) of the patient/person. This movement detector or predictor 220 is e.g. useful when monitoring patients in coma or at least having an incubation tube e.g. of a respirator or similar into the patient's mouth or having other critical medical equipment arranged near, on, or in the face of the patient that should not be removed or disturbed, even inadvertently, by the patient, for example while sleeping.

Some embodiments of an "hand/arm-to-face movement" detector or predictor 220 is illustrated further e.g. in connection with Figure 6C.

In at least some embodiments of a "hand/arm-to-face movement" detector or predictor 220, the face/head or an area comprising the face/head of the patient and each hand or an area comprising one of each hand of the patient is determined in a frame or in each frame of a number of consecutively derived frames 112. In some embodiments, the face/head or an area (see e.g. 610 in Fig. 6C) surrounding or comprising the face/head is determined e.g. or preferably using the pose data 112' and likewise an area of each visible hand is also determined e.g. or preferably using the pose data 112'. Preferably this is done across a number of frames allowing the positions of the face/head and hand(s) to tracked over time/frames allowing determination of the movements thereof. The areas (of the face/head and hand(s) may be seen as tracking or bounding boxes or tracking or bounding areas (as the areas does not need to be rectangular). If one (or both) hand area(s) either 'collides' or intersects with the face/head area, then a flag or value is set accordingly (which may be used to trigger an appropriate response, such as triggering a clinical alarm as disclosed herein). The flag or value may also be set if it seems likely (above a predetermined threshold) that the hands is seen or predicted as approaching the face/head, e.g. by determining or estimating a movement vector (or other measure of movement) of the hand(s) across a plurality of frames. This enables setting the flag or value earlier (before the hands actually reaches the face/head) in turn triggering an appropriate response, such as triggering a clinical alarm, earlier.

Additional parameters and meta data may be determined such as left arm movement yes/no, right arm movement yes/no, etc.

Instead of tracking the movement of the hands in relation to the face/head, the movement detector or predictor 220 may track the movement of the arms in relation to the face/head, or even a combination of arms and hands movement (in relation to the face/head).

Another movement detector/predictor may e.g. be a "visual cough" detector or predictor 250 that detects or predicts when the patient is (severely) coughing. Such coughing may e.g. be due to a medical condition, chronic coughing (that may cause vomiting), cough-induced complications, respiratory infection, etc. I.e. coughing that is severe enough to potentially warrant alerting medical professionals.

Some embodiments of a "visual cough" detector or predictor 250 is illustrated further e.g. in connection with Figure 6D.

In some embodiments, the face/head or an area comprising the face/head (see e.g. 620 in Fig. 6D) of the patient, the torso/chest or an area comprising the torso/chest (see e.g. 621 in Fig. 6D), each (visible) arm or an area respectively comprising each (visible) arm (see e.g. 622 in Fig. 6D), and potentially each (visible) leg or an area respectively comprising each (visible) leg (see e.g. 623 in Fig. 6D) is derived, e.g. or preferably from pose data 112', for each of a number of consecutively derived frames 112. Tracking these over a plurality of frames/over time enables analysis of respective movements thereof in turn enabling determination or estimation of whether a (severe) cough is taking place.

When mentioning cough in this context, a series of (typically severe) coughs are meant that e.g. can cause vomiting or other adverse effects.

When detecting or estimating cough movements, the head will typically move fast and by much, the chest will contract and e.g. convulse, the arms/hands will move inwards towards the body or mouth, and the legs will twitch, etc.

Additional parameters and meta data may be determined such as a potential cough is determined or estimated yes/no, etc. Determination of a potential (severe) cough may be used for a quicker and potentially more pre-emptive reaction, e.g. enabling quicker alerting or alarming a medical professional (allowing a quicker response time). An alarm for a potential cough may have a lower risk or lower urgency than an alarm for a detected or estimated (severe) cough.

In some embodiments, the legs are not tracked and the tracking thereof not used for detecting or estimating a cough movement.

In some embodiments, the acceleration of the torso/chest and of the head is determined or estimated (using the area around these or the coordinates of representative skeleton/connection points or landmarks) while the extent of arm movement is also determined. In case the respective accelerations of the torso/chest and of the head are above respective predetermined (different) thresholds and if the arm movement is below another predetermined threshold, a (severe) cough is detected or estimated to have happened.

While a microphone could be used for cough detection, it will more readily pick up sound from the whole room, not only sound for the patient being monitored. This is a drawback for example when several patients are located in the same room. Furthermore, a microphone will also record e.g. a private conversation in potential violation of GDPR and other data privacy regulations. A visual cough detector or predictor avoids these drawbacks.

Another movement detector/predictor may e.g. be an "arm movement" detector or predictor 200 that detects or predicts whether one or both arms of a patient is moved and e.g. by what amount, in what direction, to/towards what, what arm is moving, etc. This may e.g. be used to see whether the patient moves or wakes up, e.g. after being in a coma, sedated, etc. It may also be used for a patient recovering after paralysis, etc. whereby closer monitoring of movement - and potentially the extent thereof - may be desirable in order to judge potential progress in movement capabilities.

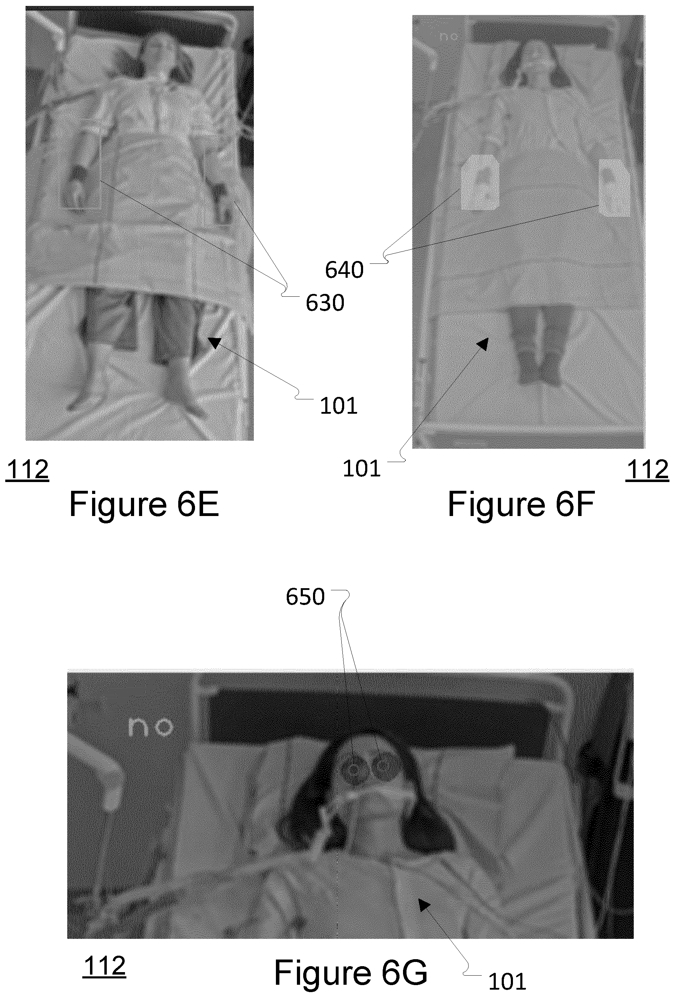

Some embodiments of an "arm movement" detector or predictor 200 is illustrated further e.g. in connection with Figure 6E.

In some embodiments, the "arm movement" detector or predictor 200 determines the location of each of the patient's arms in a frame or in each frame of a number of consecutively derived frames 112. In some embodiments, the respective arm or an area (see e.g. 630 in Fig. 6E) surrounding or comprising the respective arm is determined e.g. or preferably using the pose data 112'. Preferably this is done across a number of frames allowing the position(s) of the arm(s) to tracked over time/frames allowing determination of the movements thereof. The area(s) (of the arm(s) may be seen as tracking or bounding boxes or tracking or bounding area(s).

If one or both of the arms is determined or estimated to have moved more than a predetermined threshold length, this is flagged, e.g. or preferably separately for each arm. If an arm is not detected at all, this might be flagged as well.

Alternatively, rather than determining an area around an arm, the position of a 'skeleton' or connection point or a landmark of an arm may be tracked over time/frames, e.g. using the derived coordinates thereof, to determine the potential movement.

Another movement detector/predictor may e.g. be a "conditional arm movement" detector or predictor 200 that determines the location of each of the patient's arms (or hands) in a frame or in each frame of a number of consecutively derived frames 112 to see whether they get closer than a predetermined threshold. This may e.g. be used to monitor whether the patient is carrying out or about to carry out any adverse movements, e.g. like removing or disturbing an inserted drip or probe from an arm, etc.

Some embodiments of an "conditional arm movement" detector or predictor 200 is illustrated further e.g. in connection with Figure 6F.

In some embodiments, the respective arm or an area (see e.g. 640 in Fig. 6F) surrounding or comprising the respective arm is determined e.g. or preferably using the pose data 112'. Preferably this is done across a number of frames allowing the position(s) of the arm(s) to tracked over time/frames allowing determination of the movements thereof. The area(s) (of the arm(s) may be seen as tracking or bounding boxes or tracking or bounding area(s).

If the arms (or hands) is determined or estimated to be within a predetermined vicinity of each other, this is flagged. If an arm is not detected at all, this might be flagged as well.

Alternatively, rather than determining an area around an arm, the position of a 'skeleton' or connection point or a landmark of an arm may be tracked over time/frames, e.g. using the derived coordinates thereof, to determine the potential movement.

Another movement detector/predictor may e.g. be an "empty bed" detector or predictor 200 that detects whether a patient has left the bed. This may e.g. be due to the patient inadvertently falling out of the bed. In some embodiments, this is done using the pose data 112' and if no pose data 112' (or meaningful pose data e.g. if only a single or very few body parts are identified), the "empty bed" detector or predictor 200 sets a value or flag indicating that the bed is empty, which in turn may trigger an appropriate reaction, e.g. alerting or alarming a medical professional. In some further embodiments, an empty bed needs to be detected or estimated across a number of frames 112 before setting the value or flag indicating that the bed is empty. Another or alternative movement detector/predictor may e.g. be an "empty chair" or "empty resting device" detector or predictor 200 that detects whether a patient has left the chair/resting device, which may function like the "empty bed" detector.

Another movement detector/predictor may e.g. be a "eye movement" detector or predictor 200 that detects or predicts whether one or both eyes of the patient is/are moving. This may e.g. be useful for monitoring when a patient awakens e.g. from a coma, unconscious state, etc.

Some embodiments of an "eye movement" detector or predictor 200 is illustrated further e.g. in connection with Figure 6G.

In some embodiments, the "eye movement" detector or predictor 200 determines two contours or areas, one around each eye 650 of the patient. Movement is detected within each area or contour (e.g. as described in connection with the "any movement" detector or predictor) using pose data 112', and if movement is detected within the eye area (or at least one if two eye areas are used) but not in the face or head area then the "eye movement" detector or predictor outputs or flags "yes" (for eye movement) and otherwise "no".

Another movement detector/predictor may e.g. be a "mouth movement" detector or predictor 200 that detects or predicts whether the mouth of the patient is moving or not. This may e.g. be used for monitoring whether a patient makes or potentially makes an adverse action, e.g. like chewing on a tube inserted into the mouth of the patient, etc.

Some embodiments of an "mouth movement" detector or predictor 200 is illustrated further e.g. in connection with Figure 6H.

In some embodiments, the "mouth movement" detector or predictor 200 determines a contour or an area 660 around the detected mouth of the patient and movement is detected within the area or contour (e.g. as described in connection with the "any movement" detector or predictor) using pose data 112', e.g. or preferably by detecting potential pixel changes within the area or contour.

If movement is detected within the contour or area 660 then the "mouth movement" detector or predictor outputs or flags "YES" (for mouth movement) and otherwise outputs or flags "NO".

Another movement detector/predictor may e.g. be a "leaving bed" detector or predictor or "leaving chair/resting device" detector or predictor 200 that determines or estimates whether the patient is preparing to exit the bed or chair or other resting device.

In some embodiments, the "leaving bed" or "leaving chair" or "leaving resting device" detector or predictor checks whether one or more of a number of predetermined 'skeleton' points, etc. of the pose data is getting (sufficiently) close to a predetermined boundary zone or exits the zone.

If it is detected that one or more of the points gets too close or exit the boundary zone, the "leaving bed", "leaving chair", and "leaving resting device" detector or predictor outputs or flags "yes" and otherwise outputs or flags "no".

The boundary zone may e.g. be set or defined in the software e.g. by a nurse or similar. The boundary zone may e.g. be surrounding the bed or chair/resting device.

In some embodiments, the number of predetermined 'skeleton' points, etc. comprises or includes the respective points for the left knee, the right knee, the left shoulder, and the right shoulder.

Another movement detector/predictor may e.g. be a "sleep" detector or predictor 200 that determines or estimates the patient's waking state over a predetermined period of time.

In some embodiments, the predetermined period of time is divided into smaller time segments or windows, and if the "sleep" detector or predictor detects any (significant or at all) movement in the frame(s) of the smaller time segments or windows, e.g. as described herein, that window is designated as "active" or similar. After a predetermined number of these smaller segments or windows have elapsed, a decision is made to designate whether the patient was asleep or awake during the predetermined period of time (i.e. the larger time segment or window) depending on the results of the smaller segments or windows, e.g. if the patient is designated as awake if the patient was designated as active in at least a predetermined number of the smaller time segments or windows and otherwise the patient is designated as asleep. In some further embodiments, the "sleep" detector or predictor may also use an unknown state if it cannot reliably be determined that the patient was asleep or awake and can output "unknown" as a result.

In other/further embodiments, other types of one or more movement detectors/predictors 200 may be implemented for various other purposes. As mentioned, an advantage is that is can be customised which movement detectors/predictors to use and how they should be implemented and function and a relevant number of these can be made active (while the remaining are inactive) e.g. for a particular patent or patient-type thereby customising a particular monitoring to a particular patient or patient type thereby providing a versatile system and method. It is also relatively simple to update and adapt the method and system, e.g. by adding further movement detectors/predictors for a new particular patient situation.

Each movement detector/predictor 200 generates respective movement detection output data 150, respectively indicating whether a particular movement or set or series of movements is/are detected or predicted (e.g. within a predetermined threshold) to happen/have happened as detected or estimated by the respective movement detector/predictor 200. Each movement detector/predictor 200 may also generate respective additional data beneficial for the subsequent processing. The output data 150 and any additional data is provided to a decision or handling stage or element 501 analysing the received data and initiating one or more appropriate actions in response to the data and the analysis thereof.

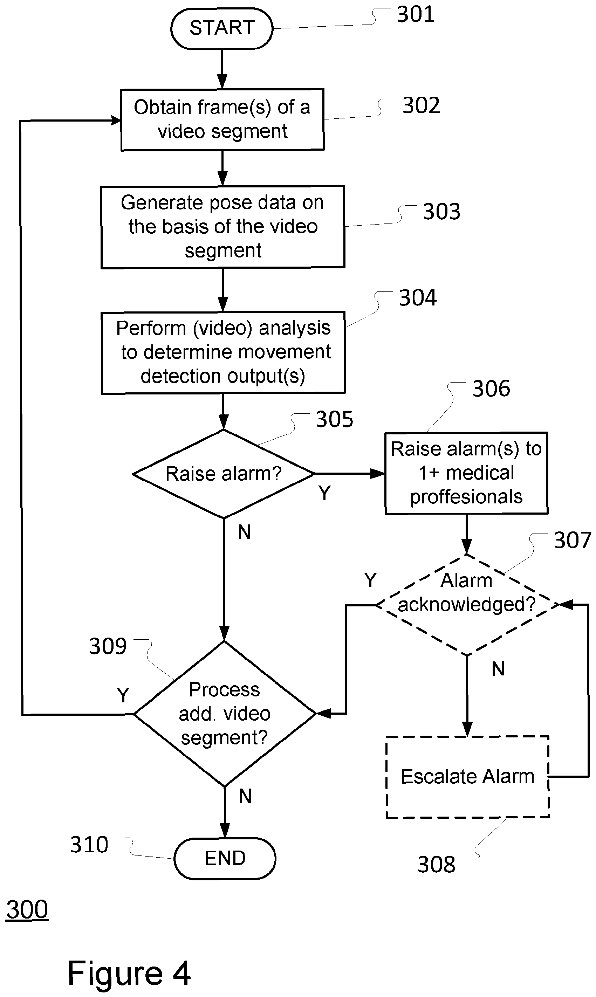

As mentioned and disclosed herein, one action may be to trigger one or more clinical alarms 502, e.g. or preferably on or to one or more user devices (see e.g. 120 in Fig. 1, etc.), e.g. or preferably as disclosed in connection with Figure 4 or otherwise herein. Additionally or alternatively, only notifications (rather than clinical alarms) are provided, and e.g. stored, to the medical professionals that may then consider whether an immediate action is needed and/or whether they should be mindful of anything and e.g. update a treatment or medical plan.

Furthermore, the decision or handling stage or element 501 may log, over time, the output data 150 (i.e. the ongoing results of the movement detector(s)/predictor(s) 200) or data derived in response thereto together with time stamps (and the patient the log is for) and store the logs in a suitable data structure such as a database structure or similar 503. Accordingly, the log may be retrieved and reviewed e.g. when reviewing (by a healthcare professional such as a nurse or doctor) incidents of a particular patient or the morning team reviewing the log after a night to see whether they should be mindful of anything and e.g. update a treatment or medical plan.

In preferred embodiments, the logged data and information is anonymous or non-personal, at least to a high or a highest degree. In such embodiments, actual video of the patient is not stored. Pose data (which is anonymous) may be stored, but in some embodiments, only the log data (which may simply be textual) is stored e.g. together with a medical patient identifier.

Accordingly, it is possible to tailor-make which movement detectors/predictors 200 to use and how they should be implemented and function for a large number of visually based monitoring situations of a patient or the like. Furthermore, the system may have implemented a number of possible movement detectors/predictors 200, and a relevant number of these can be made active (while the remaining are inactive) e.g. for a particular patent or patient-type thereby customising a particular monitoring to a particular patient or patient type.

Additionally, having several distinct movement detectors/predictors 200 also enables that they more readily respectively can be optimized for a particular monitoring task. For example, a bounding area of a face or head does not need to be the same for different movement detectors/predictors 200 (even if they all use a face or head bounding area), e.g. as is the case for the movement detectors/predictors 200 illustrated in connection with Figs. 6C (arm/hand-to-face) and 6D (cough detection), and so on.

This enables more accurate data analysis and in turn more appropriate action(s).

In preferred embodiments, none of the movement detectors/predictors 200 is based on machine learning (ML), artificial intelligence (Al), or the like but rather specifically programmed to process image data (and data derived therefrom like pose data) to determine or predict a particular movement or movement pattern.

Figure 4 schematically illustrates exemplary embodiments of a flowchart of computer-implemented video analysis and clinical alarm handling in response thereto, as disclosed herein.

Illustrated in Figure 4 is a schematic flow chart of embodiments of a computer-implemented video analysis method 300 where the computer-implemented method is or may be performed by an electronic data processing apparatus (e.g. such as the one illustrated as 100/120 in Figure 7).

At step 301, the method 300 starts and potentially is appropriately initialized, etc.

At step 302, a video segment (see e.g. 111 in Figures 1 and 2) to be analysed is obtained or provided, e.g. or preferably as described in connection with Figures 1 and 2 and/or elsewhere, where data representing a number of frames (see e.g. 112 in Figures 2 and 3) of the video is derived as disclosed herein. The (data representing the) frames, typically data representing an image of the video segment, may be consecutive frames of the video segment (e.g. all frames of the video segment) or may be a number of frames (ordered with respect to time) extracted from the video segment, i.e. two extracted frames does not necessarily need to be directly following each other in the video, e.g. if only every second, third, fourth (or any other suitable number) frame of the video segment is extracted for subsequent processing. Such frames are also referred to herein as consecutively derived frames. Figures 5A - 5C and 6A - 6H illustrate examples of consecutive/subsequent (extracted) frames.

In some embodiments, a video segment comprises 50 or 60 frames, corresponding to 2 seconds of length or time of the video segment when obtained at a rate of 25 or 30 frames pr. second, respectively. The actual number of frames (and/or time-period or rate) may vary for different embodiments and/or according to different uses. For generating data representing detected or predicted person/patient movement(s) as disclosed herein, it has been shown that using video segments comprising (e.g. extracted) about 4 - 10 frames per second, e.g. about six or six frames per second enables reliable and accurate determination or prediction of the movement data.

Given the potential urgency and potential criticality of a medical event, the length should not be too long (about 5 seconds or less) and a length of about 1 or about 2 seconds have been shown to be advantageous.

As mentioned, the segment of video segment may be (and preferably is) a (e.g. buffered) part of a respective live feed provided by a suitable video camera capturing a person or patient to be observed or monitored (when present) in an observation or monitoring area or space (see e.g. 101, 105, 110 in Figure 1). Alternatively, the video segment may be derived from/on the basis of a video file e.g. received from another source.

In general, N processing frames are extracted from the video segment where N is an integer being at least one, where the extracted processing frames may be labelled, designated, ordered, or numbered (depending on convention or definition) as frame₁, frame₂, frames, ..., frame_{N}. The processing frames may e.g. be extracted by one or more local processing units and/or by external e.g. distributed processing units, e.g. in a cloud or networked computing system; (see e.g. Figure 7). In some embodiments, six frames (i.e. N = 6) is provided as input for the video analysis, but N may (depending on use) be larger or smaller than six, e.g. selected from about 4 to about 10 frames.

As an alternative to extracting the processing frames they may be provided from another appropriate (external) source (then being associated with the video segment) that already has extracted the processing frames. If one processing frame is extracted for each overall frame, the number of frames would correspond to the frame rate in seconds of the video segment multiplied by its length in seconds.

The resolution of the extracted frames may be the same as the resolution of the video. However, in at least some embodiments, the resolution of the extracted frames is reduced compared to the resolution of the video segment, which will reduce processing time and processing effort/power usage.

In some embodiments, the image format of the frames is a colour image format (i.e. wherefrom it is possible to extract respective R, G, and B colour or corresponding values) although it could be any other suitable format (both lossless and with compression), such as JPEG/JPG, GIF, PNG, HSV (hue saturation value), CMYK, etc. In some embodiments, the frames is in greyscale or converted thereto e.g. as disclosed herein. The image format of the frames does not need to be the same as the format of the video. The format of the video may e.g. be Mp4, H.264, AVI, WMV, etc.

In at least some preferred embodiments, step 303 generates pose data (see e.g. 112' in Figure 2 and 320 in Figure 3) on the basis of the frames of the video segment, where the pose data or a part thereof (e.g. in combination with additional data) is provided, at step 304, as input to one or more, e.g. or preferably a plurality of, movement detectors/predictors as disclosed herein (see e.g. 200 in Figs. 2 and 3, etc.). The pose data comprises data representing a pose of a person/patient of the video segment (when present) to be processed. In some further embodiments, the derived pose data comprises a number of determined or derived skeleton points and e.g. respective connections or similar of a person/patient of the video segment (see e.g. 410 and 420 in Figures 4A - 4C and Figs. 6A - 6H, etc.). Accordingly, (data representing) a number of skeleton points or similar (and e.g. respective connections) are derived for each derived frame, where the skeleton points (and e.g. respective connection) are provided as input (instead of image data representing the frames in question) to the number of movement detectors/predictors for detection or prediction of respective person/patient movements, as disclosed herein, resulting in one or more movement detection outputs (see e.g. 150 in Figs. 2 and 3). Each movement detector/predictor may receive the pose data only, the frame data, or the combination thereof. The movement detectors/predictors need not, depending on use and analysis/processing carried out, receive the same data and some may received additional data/meta-data.

The generation of pose data such as data representing skeleton points and e.g. respective connections or similar of a person/patient of the video segment may be done by any suitable video analysis method or component as mentioned herein or otherwise, such as a suitable Al, machine learning or other suitable video processing method or component, as generally known. As mentioned, using pose data has the advantage that less data ('only' the skeleton points and e.g. connections compared to the pixels of image data) needs to be processed, which promotes further speed and in turn potentially quicker reaction time (for a medical professional). Furthermore, processing pose data for movement(s) of one or more different parts of a patient body is also far more robust and reliable than processing (only) image data/pixels.

In some embodiments, step 302 (or another step) may also comprise conditioning or otherwise optimising the data of the obtained video (i.e. the image data of the frames thereof) for subsequent processing by the method 300. This may e.g. involve one or more of: reducing or otherwise adapting/changing the resolution (e.g. reducing the resolution of the extracted frames compared to the resolution of the video), converting or encoding the video frames into another (e.g. more processing-suitable or -efficient) data format, perform filtering (e.g. low-pass filtering) to remove image (e.g. compression) artefacts, noise, etc., perform quality or suitability check(s), etc. of the image data of the frames. In at least some embodiments, the quality or suitability check(s) may e.g. comprise detecting, in the image data of a frame, a number of areas or regions comprising image artefacts, such as compression artefacts, that would make the video analysis incorrect or at least less reliable. If the number of areas or regions is above a predetermined threshold, then the image data/the frame, may simply be skipped or dropped from use in the video analysis. In such cases, image data of a next or subsequent frame may then be obtained and used instead (e.g. keeping track of the time-wise ordering).

In some embodiments, step 302 (or another step/other steps) may also comprise one or more pre-/post pose processing stages (see e.g. 310 and 311 in Fig. 3) processing the pose data (e.g. including the frames) prior to being provided to the one or more, e.g. or preferably a plurality of, movement detectors/predictors e.g. or preferably as disclosed herein and may involve one or more pre-processing stages or algorithms enhancing one or more of the subsequent stages, in full or in part, e.g. or preferably as disclosed herein.

At least some of these steps or part(s) thereof (of step 302) may also be performed as part of the initialising of step 301 and/or another step of the method 300.

In some embodiments, the pose data of the frames (or a part thereof) of the obtained video segment is provided (e.g. together with the frame data and/or additional data/meta-data) as input to one or more, e.g. or preferably a plurality of, movement detectors/predictors (see e.g. 200 in Figs. 2 and 3, etc.) to determine or generate one or more movement detection output data (see e.g. 150 in Figures 2 and 3) at step 304.

At step 304, video analysis is as mentioned performed by respective one or more, movement detectors/predictors using, as input, the pose data of the relevant frames (obtained or provided at step 303), the relevant frames (obtained or provided at step 302), or a combination thereof, where the video analysis determines or generates one or more movement detection output data/results (see e.g. 150 in Figures 2 and 3) for the video segment, e.g. or preferably as explained in connection with one or more of Figures 1, 2, 3, and/or as disclosed herein. Preferably, at least the pose data is used in the video analysis and additional data may also be used. It is noted that all the movement detectors/predictors need not receive the same data, but many, e.g. all (depending on use/context), will receive and use the pose data.

The generated movement detection output data (i.e. the output) for a particular video segment is or comprises, at least in some embodiments, a determination or a prediction (with a predetermined minimum likelihood) of one or more particular patient movements based on the video content (the pose data and e.g. frame data thereof) of the current video segment.

In at least some embodiments, the output is or comprises one or more flags or similar for each movement detectors/predictors signifying whether a movement detector/predictor determined the respective patient movement(s) (it is designed to detect) or not, e.g. together with additional data. In addition to a flag or similar, the output may also comprise one or more quantities of whether a person of the video segment is likely or expected to have done or is doing right now a particular movement based on tracking changes of the pose data during the video segment. The output may be a simple flag like 'yes' or `no' (and even 'maybe'), a number value of a range of possible values (e.g. as a percentage) of the likelihood (according to the video analysis) of the detection or prediction of a particular movement is correct, etc.

The generated output data (and/or data derived therefrom) may e.g. be stored or logged in a suitable memory and/or storage (see e.g. 503 in Figures 3 and 7) for further processing and/or use. The storage may be local, external, and/or distributed.

At step 305, it is checked whether a clinical alarm should be raised or not, based on the movement detection output data/results generated by step 304. This may simply involve checking a value of the data for 'yes' or 'no', checking one or more numerical values of the data against one or more predetermined values, thresholds, ranges, and so on as well as combinations thereof. The check may also involve evaluating movement detection output data/results from several movement detectors/predictors (e.g. two should signal 'yes' before a clinical alarm is triggered), etc. The movement detection output data/results of different movement detectors/predictors may also be weighted. The type of alarm may also depend on which movement detector(s) that flagged a 'yes' or which numerical value was generated, i.e. depending on which movement was detected or predicted. The recipients of an alarm may also depend on the same or similar factor(s) as the type of alarm.

If the test at step 305 is 'no', the method 300 proceeds to step 309 where it is tested or decided whether a new/next video segment, i.e. the next number of frames of the live-feed, should be processed and analysed as described herein. In case of 'no', the method proceeds to step 310 ending this run or execution of the method 300. In case of 'yes' (for step 309), the method 300 loops back to step 302 where the new/next video segment is obtained and subsequently processed in the same manner.

If the test at step 305 is 'yes' (i.e. an alarm should be raised), step 306 is executed where one or more alarms are triggered to one or more medical professionals. In some embodiments, the alarm(s) is/are triggered or notified on or for one or more user devices (see e.g. 120 in Figure 1), where each user device e.g. or preferably is associated with, and typically in possession by, a responsible medical professional on duty at a relevant health facility (typically where the patient, the alarm is triggered for, is present). The user device(s) preferably comprises a display and may e.g. be a smart phone, a table, a wearable, or the like, and the alarm is shown on the display and preferably accompanied by an appropriate sound. The alarm may be raised or triggered as disclosed herein and may e.g. comprise establishing a communication connection so the user device receives the actual live-feed of the person/patient in question and the medical professional thereby readily can see the status of the person/patient and determine the most appropriate response. In some embodiments, further relevant information and data is also provided at the user device to assist the medical professional. In alternative embodiments, a notification is simply made to or on the user device(s), e.g. with further relevant data and information, and the medical professional can decide on a proper action (if any).

In some embodiments, the method proceeds - after raising the alarm - to step 309 where it is tested whether a new/next video segment is to be processed.

In alternatively embodiments, step 306 proceeds to optional step 307 instead of directly to step 309 where it is tested whether the alarm is (appropriately) acknowledged (e.g. within a predetermined time-window) by at least one of the receiving medical professional(s), e.g. by selecting an appropriate response on a user interface of the user device in question.

If the alarm is appropriately acknowledged (`YES') e.g. within a predetermined time-window, step 307 proceeds to step 309. If the alarm is not appropriately acknowledged (`NO'), e.g. no acknowledgement is received back within a predetermined time-window, the alarm is escalated at step 308 e.g. as disclosed herein and e.g. involving another type and/or group of recipients before reverting back to step 307 where it is tested whether the then escalated alarm is acknowledged e.g. within a predetermined time-window that may be the same or different than the previous time-window. Accordingly, the alarm may be escalated to different types or categories of medical professionals and/or be escalated to be sent out to a larger group of recipients in case a first smaller group, e.g. a single person, does not acknowledge appropriately using their user device. The escalation may be only for certain types of alarms, i.e. not all alarms are necessarily escalated (but may still be logged).

Data relating to which alarm(s) is/are triggered, who the recipients is/are, if an alarm is acknowledged (and by whom and at what time) may be obtained and also logged and stored.

Steps 305, 306, 307, and 308 (and/or other steps) may e.g. be carried out by a decision or handling stage or element (see e.g. 501 in Fig. 3, etc.).

In some other embodiments, one or both of steps 306 and 307 can proceed directly to the end step 310 rather than the test at step 309 - e.g. in case the method should not continue analysing video segments when an alarm is raised.

In some embodiments, steps 306, 307, and 308 may be a fully parallel process to steps 302 - 305, 309, and 310 triggered or initiated by a 'yes' outcome of step 305.

In alternative embodiments, the step 304 (or another step) comprises further receiving one or more additional inputs, which may potentially increase the accuracy of the generated movement detection output data, at least for certain uses or in certain contexts. The additional input(s) may e.g. be received or obtained by one or more additional sensors (see e.g. 125 in Figure 1) enabling detection or prediction of patient movement then taking into account also data obtained from such one or more additional sensors. One example of such an additional input is receiving at least a part of the audio signal of the video segment to be analysed. An audio signal could also be obtained by a separate sound capturing device, such as a microphone. Alternatively or additionally, the additional input may be one or more of input from sensor(s) providing one or more of: ECG data, thermal or temperature data, pulse oximetry data (saturation), pulse data, blood pressure data, or other data representing other vital sign data, etc.

In such cases of receiving an additional audio signal as input, the method 300 could comprise, e.g. as part of step 303 or a separate/another step, obtaining or extracting an audio segment of the video segment. An obtained audio segment could for example contain sounds of moaning or heavy breathing of the person/patient of the video segment. A drawback of recoding an audio signal is e.g. that it may violate GDPR and other data privacy regulations and the privacy of the patient(s).

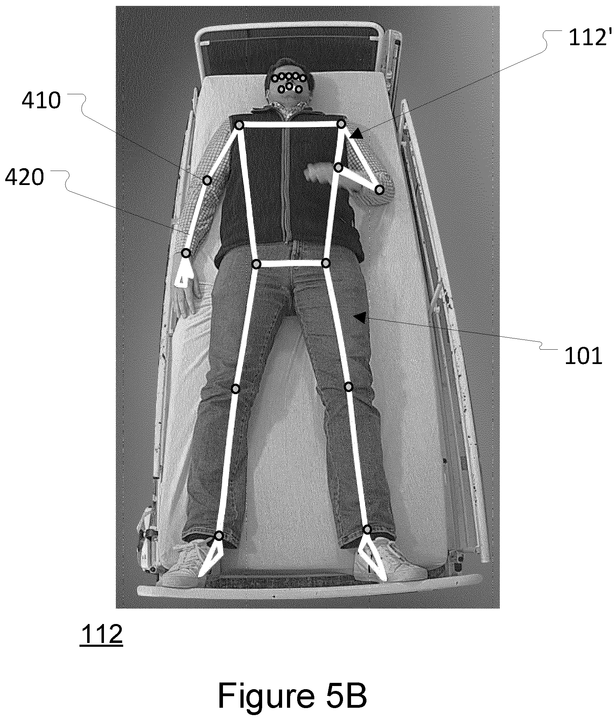

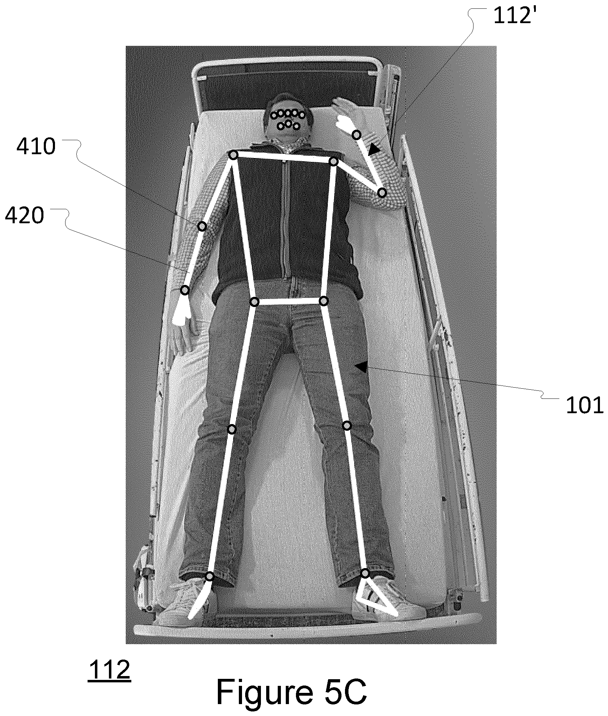

Figures 5A, 5B, 5C and 6A respectively schematically illustrates an exemplary image or frame of a sequence of images or frames of an obtained video with exemplary derived pose data superimposed (for illustrative purposes) thereupon, i.e. the pose data is illustrated imposed on respective images or frames that the pose data was derived from/for, e.g. or preferably by a pose estimator according to Figure 2 and/or as a step of the method according to Figure 4.

Schematically illustrated in Figure 5A is a (first) digital image or frame 112 having superimposed thereon pose data 112' representing a pose of a person or patient 101 contained in the image 112. In at least some embodiments (and as illustrated), the pose data 112' comprises a number of skeleton points or similar 410 with connections 420 there-between as appropriate.

Figures 5B and 5C schematically illustrate another (second) and a further (third) digital image or frame 112, respectively, with superimposed respective pose data 112' where the images or frames 112 of Figures 5A - 5C preferably are obtained as subsequent images or frames from a video as disclosed herein (see e.g. 111 in Figures 1 and 2). The pose data 112' may be provided or generated as otherwise disclosed herein.

As mentioned herein, in at least some embodiments the pose data 112' are provided to one or more, e.g. or preferably a plurality of, movement detector or predictor method(s) step(s) or component(s) (see e.g. 200 and 304 in Figures 2, 3, and 4) to generate one or more movement detection outputs (see e.g. 150 in Figures 2 and 3) as disclosed herein.

In some embodiments (and as shown), the pose data 112' also comprise data representing individual features of the person's/patient's face, e.g. 'skeleton' or connection points for each eye (e.g. one point for each end of an eye), one or more points for the mouth, etc.

As can be appreciated, using the pose data 112' rather than the image/frame data is computationally simpler and may in many cases increase the reliability or quality of generated movement detection output data compared to processing images/frames since they contain (for this purpose) much superfluous and potentially 'distracting' data/information.

In some embodiments, obtained images or frames 112 may (each) comprise several persons or patients. In such case, using pose data 112' may also be an advantage since it is simpler to process the pose data in the form of skeleton points or similar to determine which points belong to which person/patient as some inherent constraints of a skeleton point system (e.g. physiological knowledge/constraints) may be used to distinguish persons/patients (or respective parts of them) from each other.

In some embodiments, the skeleton points 410 may be tracked or estimated (in 2D or in 3D), e.g. as a movement vector or similar across subsequent images/frames to determine how the limbs or other of the person/patient moves over time. Such movements may be correlated with movement patterns known or estimated to be associated patient movements of patient movement of interest to robustly generate movement detection output data as disclosed herein.

Figures 6B - 6H schematically illustrate different examples of video processing and analysis of different movement detectors/predictors as disclosed herein. Illustrated in each figure is an illustration of the data being processed illustrated together with the image data forming the basis for the processing.

Figure 6B schematically illustrates video processing and analysis of an "any movement" detector or predictor (see e.g. 210 in Figure 3 and 200 elsewhere) that determines or predicts whether there is any movement or any meaningful movement within a particular frame compared to other adjacent frames. This detector/predictor has been described earlier e.g. in connection with Figure 3. Illustrated is an exemplary image or exemplary frame data 112 comprising a person or patient 101. The image/frame data has been converted into a greyscale image prior to processing. Additionally, a contour or boundary 601 has been determined e.g. or preferably on the basis of derived pose data (see e.g. 112' elsewhere), derived for the particular image/frame data 112. Accordingly, the contour or boundary 601 is dynamic, i.e. it is (potentially) updated (as the pose data (potentially) changes) for each image/frame data. It is noted that the extent of the contour or boundary 601 (from respective points/elements of the pose data) does not need to be the same, i.e. the extent of the contour or boundary 601 may be larger around e.g. the arms than e.g. the legs.

For that, the "any movement" detector or predictor may analyse a plurality of consecutively derived frames 112 to determine whether there is any movement (e.g. movement within a certain tolerance) across a number of these frames.

In at least some embodiments, the "any movement" detector or predictor checks for 'any' movement, preferably only in the parts of a particular frame that is within the determined contour or boundary 601 thereof and outputs (see e.g. 150 elsewhere) a 'yes' or corresponding value in case any movement is detected or predicted and `no' or corresponding value in case no movement or no meaningful movement (i.e./e.g. above a predetermined level or threshold) is detected or predicted.

Detecting only for potential movement inside the contour or boundary 601 saves (even further) computational effort and power usage and may also reduce the number of false positives.

In short, the "any movement" detector or predictor (at least in some embodiments) receives a number of consecutively obtained frames, e.g. six frames or another suitable number, obtained from images of a video sequence of a live-feed and receives (or derives) the pose data of each received frame, determines the contour or boundary 601 around the person present (if present) in each frame, and determines or predicts whether any (meaningful, within the given context) movement takes place inside the contour or boundary 601 across one or more of the frames and output a movement detection output accordingly for further use/processing.

It is noted that in the figure, the contour or boundary 601 is superimposed on the image/frame for illustrative purposes.

In some embodiments, the determination or prediction of whether any (meaningful, within the given context) movement takes place across one or more of the received frames is done by determining the number of pixels that changed value (to a certain degree) inside the contour or boundary 601 and comparing the number against a predetermined suitable threshold. If the number of pixels having (sufficiently) changed value exceeds the threshold, any movement is flagged "YES" or similar and if not exceeding, any movement if flagged "NO" or similar. This determines overall movement on a pixel level and is also a determination that is robust, e.g. in relation to the presence or movement of shadows being picked up by the camera, while still being efficient.

Figure 6C schematically illustrates video processing and analysis of an "arm-to-face movement", or alternatively a "hand-to-face movement", detector or predictor (see e.g. 220 in Figure 3 and 200 elsewhere) that determines or predicts whether there is any movement that involves the patient moving one or both arm(s) or hand(s) to or (sufficiently) towards the patient's face. This detector/predictor has been described earlier e.g. in connection with Figure 3.

In some embodiments, the detector/predictor determines an area 610 surrounding or comprising the face and/or head of the patient e.g. or preferably using pose data of the image/frame. Likewise, an area 611 of each visible hand is determined e.g. or preferably using the pose data. This is done for each frame (received by the detector/predictor) and the hand/arm area(s) 611 are tracked across the frames in relation to the area 610. If one area 611 coincides with area 610 or moves across the frames sufficiently towards area 610, the "hand/arm-to-face movement" detector/predictor may output 'yes' or the like and otherwise output 'no'. If a hand cannot be determined to be present, a flag or notification may, at least in some embodiments, be set or raised accordingly, e.g. also indicating which hand.

Figure 6D schematically illustrates video processing and analysis of a "visual cough" detector or predictor (see e.g. 250 in Figure 3 and 200 elsewhere) that detects or predicts when the patient (severely) is coughing. This detector/predictor has been described elsewhere e.g. in connection with Figure 3.

Figure 6E schematically illustrates video processing and analysis of an "arm movement" detector or predictor (see e.g. 200 elsewhere) that determines both whether the patient's left arm and the right ram respectively is moving. This detector/predictor has been described elsewhere e.g. in connection with Figure 3.

Figure 6F schematically illustrates video processing and analysis of a "conditional arm movement" detector or predictor (see e.g. 200 elsewhere) that determines the location of each of the patient's arms (or hands) in a frame or in each frame of a number of consecutively derived frames 112 to see whether they get closer than a predetermined threshold.. This detector/predictor has been described elsewhere e.g. in connection with Figure 3.

Figure 6G schematically illustrates video processing and analysis of an "eye movement" detector or predictor (see e.g. 200 elsewhere) that detects or predicts whether one or both eyes of the patient is/are moving. This detector/predictor has been described elsewhere e.g. in connection with Figure 3.

Figure 6H schematically illustrates video processing and analysis of a "mouth movement" detector or predictor (see e.g. 200 elsewhere) that detects or predicts whether the mouth of the patient is moving or not. This detector/predictor has been described elsewhere e.g. in connection with Figure 3.

In some embodiments, the various data (like tracked areas, pose data, etc.) may be derived only for the parts or pixels of the frame that has been designated or determined to be in the foreground of the frame to remove noise, reduce processing time/'effort', and/or reduce or avoid false positives. In some embodiments, this is the case for all detectors/predictors while in in other embodiments, it is only for a subset thereof.

Figure 7 schematically illustrates a functional block diagram of embodiments of an electronic data processing device or system configured to generate one or more movement detection outputs (see 150 elsewhere) and (if needed/warranted) initiating one or more appropriate actions in response to the data and the analysis thereof such as raising a clinical alarm to one or more medical professionals (or rather their respectively associated user devices), simply logging detected or predicted movements, etc. and/or implementing various embodiments of the methods as disclosed herein.

Shown is an electronic data processing apparatus 100 comprising one or more processing units 502 connected via one or more communications and/or data buses 501 to an electronic memory and/or electronic storage 503, and one or more signal transmitter and receiver communications elements 504 (e.g. one or more of cellular, Bluetooth, WiFi, etc.) for communicating via a computer or electronic network, the Internet, and/or the like. In at least some embodiments, the electronic data processing apparatus 100 is configured to communicate with a cloud computing system 509 that may (or may not) be a distributed system. The one or more processing units 502 may e.g. include one or more CPUs, TPUs (tensor processing units), FPUs (floating point units), GPUs (graphics processing units), and/or the like.

The electronic data processing apparatus 100 may also comprise an optional display 508 and/or one or more optional user interface elements 507.

The electronic data processing apparatus 100 can e.g. be one or more programmed computational devices, e.g. like a PC, laptop, computer, client, server, smart-phone, tablet, etc. and is specially programmed to carry out or execute the computer-implemented method(s) and embodiments thereof as described throughout the specification and variations thereof.

In at least some embodiments, the electronic data processing apparatus 100 is a receiving and/or processing system as disclosed herein (see e.g. 100 in Figure 1) and configured to communicate and exchange data, via the one or more signal transmitter and receiver communications elements 504, with one or more user devices (see e.g. 120 in Figure 1) respectively associated with a medical professional to trigger alarms on the relevant user device(s) and e.g. receiving one or more acknowledgements as disclosed herein.

A user device (see e.g. 120 in Figure 1) as disclosed herein may also comprise one or more of the elements of the electronic data processing apparatus 100, then comprising a display 508 and/or one or more user interface elements 507, e.g. to display a received alarm to a user and receive an acknowledgement of it from the user (and communicate the acknowledgement back again).

Some preferred embodiments have been shown in the foregoing, but it should be stressed that the invention is not limited to these but may be embodied in other ways within the subject matter defined in the following claims.

It should be emphasized that the term "comprises/comprising" when used in this specification is taken to specify the presence of stated features, elements, steps or components but does not preclude the presence or addition of one or more other features, elements, steps, components or groups thereof.

In the claims enumerating several features, some or all of these features may be embodied by one and the same element, component or item. The mere fact that certain measures are recited in mutually different dependent claims or described in different embodiments does not indicate that a combination of these measures cannot be used to advantage.

In the claims, any reference signs placed between parentheses shall not be constructed as limiting the claim. The word "comprising" does not exclude the presence of elements or steps other than those listed in a claim. The word "a" or "an" preceding an element does not exclude the presence of a plurality of such elements.

The mere fact that certain measures are recited in mutually different dependent claims does not indicate that a combination of these measures cannot be used to an advantage.

It will be apparent to a person skilled in the art that the various embodiments of the invention as disclosed and/or elements thereof can be combined without departing from the scope of the invention as defined in the claims.

## Claims

1. A computer-implemented method (300) performing video analysis of a video-feed (111), where the method comprises the steps of:
- obtaining or extracting a plurality of frames (112) from at least a segment of the video-feed (111),
- generating pose data (112') for each or a least a predetermined number of the plurality of frames (112), the generated pose data (112') representing at least a part of a patient (101) comprised by at least one, typically a plurality, of the (first) plurality of frames (112),
- processing (304), by a first patient movement detector or predictor (200), the generated pose data (112'), and/or first additional data derived on the basis of the generated pose data (112'), to detect or predict at least a first movement of the patient (101) resulting in first movement data representing first movement detection output data (150).

2. The computer-implemented method according to claim 1, wherein the computer-implemented method (300) further comprises the step of:
- processing (304), by at least a second patient movement detector or predictor (200), the generated pose data (112'), and/or at least second additional data derived on the basis of the generated pose data (112'), to detect or predict at least a second movement of the patient (101) resulting in second movement data representing at least second movement detection output data (150).

3. The computer-implemented method according to claim 2, wherein the at least one second patient movement detector or predictor (200) is configured to execute one or more of:
- detect or predict a hand to face or arm to face movement of the patient (101) and generate the second movement data in response thereto,
- detect or predict a cough-related movement of the patient (101) and generate the second movement data in response thereto,
- detect or predict an arm movement of the patient (101) and generate the second movement data in response thereto,
- detect or predict conditional arm movement of the patient (101) and generate the second movement data in response thereto,
- detect or predict eye movement of the patient (101) and generate data the second movement data in response thereto,
- detect or predict mouth movement patient (101) and generate data the second movement data in response thereto,
- detect or predict a waking and/or sleeping state of the patient (101) over a predetermined period of time and generate data the second movement data in response thereto,
- detect or predict leaving a bed, chair, or resting device and generate data the second movement data in response thereto, and
- detect or predict whether the patient (101) is located in a bed, a chair, or a resting device or not and generate the second movement data in response thereto.

4. The computer-implemented method according to any one of claims 1 - 3, wherein the first patient movement detector or predictor (200) is configured to:
- determine or predict whether there is any movement, or any movement in accordance with one or more predetermined criteria, within a particular frame of the plurality of frames (112) compared to at least another adjacent frame of the plurality of frames (112) and generate the first movement data in response thereto.

5. The computer-implemented method according to claim 4 as dependent on claim 2 or 3, wherein the functionality of the first patient movement detector or predictor (200) is carried out, resulting in the first movement data, before the functionality of the at least one second patient movement detector or predictor (200), and where whether the functionality of the at least one second patient movement detector or predictor (200) is carried out or not is dependent on the first movement data so that the functionality of the at least one second patient movement detector or predictor (200), or a part thereof, is not carried out if the first patient movement detector or predictor (200) does not detect or predict any movement in accordance with the one or more predetermined criteria.

6. The computer-implemented method according to any one of claims 1 - 5, wherein
- the method further comprises deriving data representing a contour or boundary (601) for a frame (112) in response to the generated pose data (112') of that frame (112), the contour or boundary (601) defining an area around at least a part of the patient (101) being present in that frame (112), and
- wherein the first movement data representing first movement detection output data (150) and/or the second movement data representing second movement detection output data (150) is/are derived processing data of the frame (112) within the derived contour or boundary (601).

7. The computer-implemented method according to any one of claims 1 - 6, wherein
- the method further comprises determining or designating the pixels or parts of a particular frame (112) that constitutes a foreground of the particular frame (112), and
- the first movement data representing first movement detection output data (150) and/or the second movement data representing second movement detection output data (150) is/are derived processing data of the particular frame (112) determined or designated to constitute the foreground of the particular frame (112).

8. The computer-implemented method according to any one of claims 1-7, wherein the method further comprises automatically turning off the video-feed (111), and thereby the processing of the frames (112) of the video-feed (111), when it is detected that another person than the patient (101) is present in at least one frame of the plurality of frames (112).

9. The computer-implemented method according to any one of claims 1 - 8, wherein the wherein the method further comprises logging and storing detected or predicted movements of the patient (101) in response to the first movement data representing first movement detection output data (150) and/or the second movement data representing second movement detection output data (150).

10. The computer-implemented method according to any one of claims 1 - 9, wherein the computer-implemented method (300) further comprises the step of:
- automatically triggering a clinical alarm on one or more user devices (120), each user device (120) associated with a respective predetermined medical professional, in response to the generated first and/or second movement data (150).

11. The computer-implemented method according to claim 10, wherein the clinical alarm is triggered firstly on a first group of the user devices (120) and secondly is escalated and triggered on a second group of the user devices (120) if no acknowledgement is received from at least one of the first group of user devices (120) within a predetermined period of time from triggering the clinical alarm on the first group of user devices (120).

12. The computer-implemented method according to any one of claims 10 - 11, wherein the method comprises providing a live-feed or a substantial live-feed to a first user device (120) the clinical alarm was triggered on.

13. The computer-implemented method according to any one of claims 1 - 12, wherein the video-feed (111) is obtained by a video camera (110) where the video camera (110) is arranged to capture video of a predetermined observation or monitoring area or space (105), the observation or monitoring area or space (105) e.g. or preferably comprising a bed, chair, or other resting device assigned to the patient (101) in a health care facility.

14. The computer-implemented method according to any one of claims 1 - 13, wherein the computer-implemented method (300) performing video analysis of a video-feed (111) comprises:
- obtaining or receiving data representing additional sensor data from one or more additional sensors (125),
- providing at least a part of the data representing additional sensor data to one or more of the first patient movement detector or predictor (200) and the at least one second patient movement detector or predictor (200) and generate the first and/or second movement data also in response thereto.

15. An electronic data processing system (100), comprising
one or more processing units (501, 502) connected to an electronic memory (503), and
one or more signal transmitter and receiver communications elements (504) for communicating via a computer network,
wherein the one or more processing units (502) are programmed and configured to execute the computer-implemented method (300) according to any one of claims 1 - 14.
